# EUROPEAN PATENT APPLICATION

(11) **EP 4 797 436 A1**
(43) Date of publication of application: **26.08.2026**
(21) Application number: 24881479.0
(22) Date of filing: 15.10.2024
(51) Int. Cl.: H01P 3/00

(54) **WAVEGUIDE DEVICE AND RELATED PRODUCT**

(30) Priority: 23.10.2023 CN 202311383055
(71) Applicant: Yinwang Intelligent Technologies Co., Ltd., Shenzhen, Guangdong 518110 (CN)
(72) Inventor: LI, Haowei, Shenzhen, Guangdong 518129 (CN); WU, Zhongjie, Shenzhen, Guangdong 518129 (CN); HE, Yin, Shenzhen, Guangdong 518129 (CN); JIA, Runqiang, Shenzhen, Guangdong 518129 (CN); GAO, Xiang, Shenzhen, Guangdong 518129 (CN)
(74) Representative: Maiwald GmbH
(86) International application number: PCT/CN2024/124956
(87) International publication number: WO 2025/087113

(57) **Abstract**

A waveguide apparatus and a related product are disclosed, and relate to the field of millimeter-wave radar technologies. The waveguide apparatus includes a first waveguide and N electromagnetic band gap units. The N electromagnetic band gap units are located between the first waveguide and an antenna apparatus. The N electromagnetic band gap units are aperiodically disposed around the first waveguide. Signal transmission is performed between the first waveguide and the antenna apparatus. N is an integer greater than 0. In the waveguide apparatus, disposing the electromagnetic band gap units aperiodically can implement reliable signal transmission from a waveguide outlet of a radio frequency chip to a waveguide feed port of the antenna apparatus, and improve signal transmission performance as well as robustness of the waveguide outlet of the radio frequency chip and the waveguide feed port of the antenna apparatus.

## Description

This application claims priority to Chinese Patent Application No. 202311383055.0, filed with the China National Intellectual Property Administration on October 23, 2023 and entitled "WAVEGUIDE APPARATUS AND RELATED PRODUCT", which is incorporated herein by reference in its entirety.

### TECHNICAL FIELD

This application relates to the field of millimeter-wave radar technologies, and in particular, to a waveguide apparatus and a related product.

### BACKGROUND

A waveguide (waveguide) is a structure used to directionally guide electromagnetic waves. The waveguide mainly serves as a transmission line for a microwave frequency, and is used to connect a microwave transmitter and a microwave receiver to their respective antennas in a microwave radio link device like a radar.

In a millimeter-wave radar system, a three-dimensional waveguide antenna has obvious advantages over a planar printed circuit board (printed circuit board, PCB) printed antenna in terms of a loss and a broadband characteristic. A waveguide outlet of a radio frequency chip adapted to the waveguide antenna is a rectangular waveguide port, and the waveguide outlet of the radio frequency chip needs to be vertically connected to a waveguide feed port of an antenna apparatus, to implement vertical signal transmission.

However, a position at which the waveguide outlet of the radio frequency chip is vertically connected to the waveguide feed port of the antenna apparatus is prone to a mounting deviation and a gap during engineering implementation, resulting in significant deterioration or even failure of signal transmission performance. This further results in low robustness of the waveguide outlet of the radio frequency chip and the waveguide feed port of the antenna apparatus.

### SUMMARY

Embodiments of this application provide a waveguide apparatus and a related product, to implement reliable signal transmission from a waveguide outlet of a radio frequency chip to a waveguide feed port of an antenna apparatus, and improve signal transmission performance as well as robustness of the waveguide outlet of the radio frequency chip and the waveguide feed port of the antenna apparatus.

According to a first aspect, an embodiment of this application provides a waveguide apparatus. The waveguide apparatus includes:
a first waveguide and N electromagnetic band gap units, where N is an integer greater than 0; and
the N electromagnetic band gap units are located between the first waveguide and an antenna apparatus, the N electromagnetic band gap units are aperiodically disposed around the first waveguide, and signal transmission is performed between the first waveguide and the antenna apparatus.

In this embodiment of this application, the waveguide apparatus is provided, and may be used in a millimeter-wave radar or a millimeter-wave radar system. The N electromagnetic band gap (electromagnetic band gap, EBG) units in the waveguide apparatus are located between the first waveguide and the antenna apparatus, and the N electromagnetic band gap units are aperiodically disposed around the first waveguide, to form an electromagnetic stopband. This prevents a signal transmitted in the first waveguide from leaking at a joint between the first waveguide and the antenna apparatus.

At present, a waveguide outlet of a radio frequency chip adapted to a waveguide antenna is a rectangular waveguide port, and the waveguide outlet of the radio frequency chip needs to be vertically connected to a waveguide feed port of the antenna apparatus, to implement vertical signal transmission. However, a position at which the waveguide outlet of the radio frequency chip is vertically connected to the waveguide feed port of the antenna apparatus is prone to a mounting deviation and a gap during engineering implementation, resulting in significant deterioration or even failure of signal transmission performance. This further results in low robustness of the waveguide outlet of the radio frequency chip and the waveguide feed port of the antenna apparatus.

In embodiments of this application, disposing the EBG units aperiodically can resolve a problem of significant deterioration or even failure of signal transmission performance caused by the mounting deviation and the gap, implement reliable signal transmission from the waveguide outlet of the radio frequency chip to the waveguide feed port of the antenna apparatus, and improve signal transmission performance as well as robustness of the waveguide outlet of the radio frequency chip and the waveguide feed port of the antenna apparatus.

In a possible implementation, two adjacent electromagnetic band gap units in the N electromagnetic band gap units have different cross-sectional shapes.

In an implementation of this application, a possible specific implementation of the N electromagnetic band gap units is provided. Specifically, the two adjacent electromagnetic band gap units in the N electromagnetic band gap units have different cross-sectional shapes. In this case, the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, a cross section of the two adjacent electromagnetic band gap units may be a cross section perpendicular to a signal transmission direction in the first waveguide, or may be a cross section parallel to a signal transmission direction in the first waveguide. This is not limited in implementations of this application.

In a possible implementation, the N electromagnetic band gap units are mirror-symmetrically arranged.

In an implementation of this application, a possible specific implementation of the N electromagnetic band gap units is provided. Specifically, the N electromagnetic band gap units are mirror-symmetrically arranged. In this case, the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, the N electromagnetic band gap units are mirror-symmetrically arranged on a plane perpendicular to the signal transmission direction in the first waveguide.

In a possible implementation, two groups of adjacent electromagnetic band gap units in the N electromagnetic band gap units have different spacings.

In an implementation of this application, a possible specific implementation of the N electromagnetic band gap units is provided. Specifically, the two groups of adjacent electromagnetic band gap units in the N electromagnetic band gap units have different spacings. In this case, the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, a spacing between each of the two groups of adjacent electromagnetic band gap units may be understood as a spacing between center points of each of the two groups of adjacent electromagnetic band gap units, or may be understood as an edge-to-edge spacing between the two groups of adjacent electromagnetic band gap units. This is not limited in implementations of this application.

In a possible implementation, the N electromagnetic band gap units are arranged in a rectangular configuration around the first waveguide.

In an implementation of this application, a possible specific implementation of the N electromagnetic band gap units is provided. Specifically, the N electromagnetic band gap units are arranged in a rectangular configuration around the first waveguide. In this case, the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, the N electromagnetic band gap units may alternatively be arranged around the first waveguide in a square configuration, a circular configuration, an elliptical configuration, or the like, provided that the N electromagnetic band gap units are aperiodically disposed around the first waveguide, to form the electromagnetic stopband. This is not limited in implementations of this application.

In a possible implementation, two adjacent electromagnetic band gap units in the N electromagnetic band gap units have different cross-sectional areas.

In an implementation of this application, a possible specific implementation of the N electromagnetic band gap units is provided. Specifically, the two adjacent electromagnetic band gap units in the N electromagnetic band gap units have different cross-sectional areas. In this case, the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, a cross section of the two adjacent electromagnetic band gap units may be a cross section perpendicular to a signal transmission direction in the first waveguide, or may be a cross section parallel to a signal transmission direction in the first waveguide. This is not limited in implementations of this application.

In a possible implementation, the N electromagnetic band gap units are protrusion structures with rectangular cut corners.

In an implementation of this application, a possible specific implementation of the N electromagnetic band gap units is provided. Specifically, the N electromagnetic band gap units are protrusion structures with rectangular cut corners. In this case, the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, the N electromagnetic band gap units each may be a protrusion structure with one rectangular cut corner, or may be a protrusion structure with a plurality of rectangular cut corners. This is not limited in implementations of this application. When the electromagnetic band gap units each have only one rectangular cut corner, the rectangular cut corner may be any one of a rectangular upper left cut corner, a rectangular upper right cut corner, a rectangular lower left cut corner, or a rectangular lower right cut corner. This is not limited in implementations of this application. When the electromagnetic band gap units each have a plurality of rectangular cut corners, the plurality of rectangular cut corners may be any two or more of a rectangular upper left cut corner, a rectangular upper right cut corner, a rectangular lower left cut corner, or a rectangular lower right cut corner. This is not limited in implementations of this application.

Optionally, the N electromagnetic band gap units may alternatively be protrusion structures whose cut corners are in a shape of a square, a circle, an ellipse, or the like. This is not limited in implementations of this application.

In a possible implementation, two groups of adjacent electromagnetic band gap units in the N electromagnetic band gap units have a same spacing.

In an implementation of this application, a possible specific implementation of the N electromagnetic band gap units is provided. Specifically, the two groups of adjacent electromagnetic band gap units in the N electromagnetic band gap units have a same spacing. It may be understood that, when two adjacent electromagnetic band gap units in the N electromagnetic band gap units have different cross-sectional shapes, or when the N electromagnetic band gap units are mirror-symmetrically arranged, or when two adjacent electromagnetic band gap units in the N electromagnetic band gap units have different cross-sectional areas, or when the N electromagnetic band gap units are protrusion structures with rectangular cut corners, the two groups of adjacent electromagnetic band gap units in the N electromagnetic band gap units have a same spacing, so that the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

Optionally, a spacing between each of the two groups of adjacent electromagnetic band gap units may be understood as a spacing between center points of each of the two groups of adjacent electromagnetic band gap units, or may be understood as an edge-to-edge spacing between the two groups of adjacent electromagnetic band gap units. This is not limited in implementations of this application.

In a possible implementation, the N electromagnetic band gap units have three types of structural forms, and N=7.

In an implementation of this application, a possible specific implementation of the N electromagnetic band gap units is provided. Specifically, the N electromagnetic band gap units have three types of structural forms, and N=7. To be specific, the waveguide apparatus in this implementation of this application includes the first waveguide and seven electromagnetic band gap units in three structural forms, the seven electromagnetic band gap units in three structural forms are located between the first waveguide and the antenna apparatus, and the seven electromagnetic band gap units in three structural forms are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

In a possible implementation, the N electromagnetic band gap units have a same length in a first direction, and the first direction is a signal transmission direction in the first waveguide.

In an implementation of this application, a possible specific implementation of the N electromagnetic band gap units is provided. Specifically, that the N electromagnetic band gap units have a same length in the signal transmission direction in the first waveguide may be understood as that the N electromagnetic band gap units has a same height, to form the electromagnetic stopband, so that the signal transmitted in the first waveguide is prevented from leaking at the joint between the first waveguide and the antenna apparatus.

In a possible implementation, at least two of the N electromagnetic band gap units have different lengths in a second direction, and the second direction is perpendicular to the signal transmission direction in the first waveguide.

In an implementation of this application, a possible specific implementation of the N electromagnetic band gap units is provided. Specifically, that the at least two of the N electromagnetic band gap units have different lengths in a direction perpendicular to the signal transmission direction in the first waveguide may be understood that the at least two of the N electromagnetic band gap units have unequal lengths, to form the electromagnetic stopband. This resolves the problem of significant deterioration or even failure of signal transmission performance caused by the mounting deviation and the gap.

In a possible implementation, an edge-to-edge spacing between any two adjacent electromagnetic band gap units in the N electromagnetic band gap units meets the following condition: 0.15λ≤a≤0.3λ, where
a indicates the edge-to-edge spacing between the any two adjacent electromagnetic band gap units in the N electromagnetic band gap units, and λ indicates a vacuum wavelength of an electromagnetic wave transmitted in the first waveguide.

In an implementation of this application, a possible specific implementation of the N electromagnetic band gap units is provided. Specifically, the edge-to-edge spacing between the any two adjacent electromagnetic band gap units in the N electromagnetic band gap units ranges from 0.15λ to 0.3λ, to form the electromagnetic stopband. This prevents the signal transmitted in the first waveguide from leaking at the joint between the first waveguide and the antenna apparatus.

Optionally, the edge-to-edge spacing between the any two adjacent electromagnetic band gap units may be understood as a shortest edge-to-edge spacing between the any two adjacent electromagnetic band gap units.

In a possible implementation, the first waveguide is a ridge waveguide.

In an implementation of this application, a possible specific implementation of the first waveguide is provided. Specifically, the first waveguide is a ridge waveguide. Further, the first waveguide is a ridge waveguide of the radio frequency chip. After passing through the N electromagnetic band gap units that are aperiodically arranged, a radio frequency signal is transmitted from a ridge waveguide port of the radio frequency chip (namely, a first waveguide port) to the antenna apparatus, to implement reliable signal transmission from a ridge waveguide outlet of the radio frequency chip to the waveguide feed port of the antenna apparatus, and improve signal transmission performance as well as robustness of the ridge waveguide outlet of the radio frequency chip and the waveguide feed port of the antenna apparatus.

In a possible implementation, the N electromagnetic band gap units are disposed on an antenna apparatus side or a first waveguide side.

In an implementation of this application, a possible specific implementation of the N electromagnetic band gap units is provided. Specifically, the N electromagnetic band gap units are disposed on the antenna apparatus side or the first waveguide side. It may be understood that, provided that the N electromagnetic band gap units are located between the first waveguide and the antenna apparatus and are aperiodically arranged, to form the electromagnetic stopband, the N electromagnetic band gap units may be disposed on the antenna apparatus side or the first waveguide. This can prevent the signal transmitted in the first waveguide from leaking at the joint between the first waveguide and the antenna apparatus, and can resolve the problem of significant deterioration or even failure of signal transmission performance caused by the mounting deviation and the gap.

According to a second aspect, an embodiment of this application provides a transceiver apparatus, where the transceiver apparatus includes M waveguide apparatuses according to the first aspect or any one of the possible implementations of the first aspect, and M is an integer greater than 1.

This embodiment of this application provides the transceiver apparatus that may be used in a millimeter-wave radar or a millimeter-wave radar system. The transceiver apparatus includes the plurality of waveguide apparatuses according to the first aspect or any one of the possible implementations of the first aspect.

Optionally, the transceiver apparatus in this embodiment of this application may be a transition structure with a plurality of channel (that is, a plurality of waveguide apparatuses) that is obtained by performing overall rotation, replication, and translation on the single channel (that is, a single waveguide apparatus). The transceiver apparatus is located between a waveguide outlet of a radio frequency chip and an antenna apparatus, and is aperiodically disposed around the waveguide outlet of the radio frequency chip, to form an electromagnetic stopband. This prevents a signal transmitted in the waveguide of the radio frequency chip from leaking at a joint between the waveguide outlet of the radio frequency chip and the antenna apparatus, implements reliable signal transmission from the waveguide outlet of the radio frequency chip to a waveguide feed port of the antenna apparatus, resolves a problem of significant deterioration or even failure of signal transmission performance caused by a mounting deviation and a gap, and improves signal transmission performance as well as robustness of the waveguide outlet of the radio frequency chip and the waveguide feed port of the antenna apparatus.

In a possible implementation, the M waveguide apparatuses are aperiodically arranged.

In an implementation of this application, a possible specific implementation of the M waveguide apparatuses is provided. Specifically, the M waveguide apparatuses are aperiodically arranged. In this case, the M waveguide apparatuses are aperiodically disposed around the waveguide outlet of the radio frequency chip, to form the electromagnetic stopband. This can prevent the signal transmitted in the waveguide of the radio frequency chip from leaking at the joint between the waveguide outlet of the radio frequency chip and the antenna apparatus, and can resolve the problem of significant deterioration or even failure of signal transmission performance caused by the mounting deviation and the gap.

In a possible implementation, the M waveguide apparatuses are mirror-symmetrically arranged.

In an implementation of this application, a possible specific implementation of the M waveguide apparatuses is provided. Specifically, the M waveguide apparatuses are mirror-symmetrically arranged. In this case, the M waveguide apparatuses are aperiodically disposed around the waveguide outlet of the radio frequency chip, to form the electromagnetic stopband. This can prevent the signal transmitted in a waveguide cavity in the radio frequency chip from leaking at the joint between the waveguide outlet of the radio frequency chip and the antenna apparatus, and can resolve the problem of significant deterioration or even failure of signal transmission performance caused by the mounting deviation and the gap.

In a possible implementation, center points of the M waveguide apparatuses are not on a straight line.

In an implementation of this application, a possible specific implementation of the M waveguide apparatuses is provided. Specifically, the center points of the M waveguide apparatuses are not on a straight line. In this case, the M waveguide apparatuses are aperiodically disposed around the waveguide outlet of the radio frequency chip, to form the electromagnetic stopband. This can prevent the signal transmitted in the waveguide of the radio frequency chip from leaking at the joint between the waveguide outlet of the radio frequency chip and the antenna apparatus, and can resolve the problem of significant deterioration or even failure of signal transmission performance caused by the mounting deviation and the gap.

In a possible implementation, two of the M waveguide apparatuses have different structures.

In an implementation of this application, a possible specific implementation of the M waveguide apparatuses is provided. Specifically, the two of the M waveguide apparatuses have different structures. In this case, the M waveguide apparatuses are aperiodically disposed around the waveguide outlet of the radio frequency chip, to form the electromagnetic stopband. This can prevent the signal transmitted in the waveguide of the radio frequency chip from leaking at the joint between the waveguide outlet of the radio frequency chip and the antenna apparatus, and can resolve the problem of significant deterioration or even failure of signal transmission performance caused by the mounting deviation and the gap.

Optionally, the two of the M waveguide apparatuses have different structures. The two waveguide apparatuses may be understood as two waveguide apparatuses obtained by performing overall rotation, replication, and translation on the single waveguide apparatus according to the first aspect or any one of the possible implementations of the first aspect, and are aperiodically disposed around the waveguide outlet of the radio frequency chip.

In a possible implementation, the transceiver apparatus further includes an enclosure frame, and the enclosure frame is disposed on a periphery of the M waveguide apparatuses.

In this implementation of this application, the transceiver apparatus is provided. The transceiver apparatus further includes the enclosure frame, and the enclosure frame is disposed on the periphery of the M waveguide apparatuses. In this implementation of this application, the enclosure frame is disposed on the periphery of the M waveguide apparatuses to form a cavity. The cavity may meet, when a specific gap exists on a mounting surface corresponding to the transceiver apparatus, a condition of destroying wave transmission on the surface, to improve isolation between different channels. This resolves the problem of significant deterioration or even failure of signal transmission performance caused by the mounting deviation and the gap.

Optionally, the enclosure frame may be a metal enclosure frame.

In a possible implementation, a geometric center of the enclosure frame is the same as a geometric center of the M waveguide apparatuses.

In an implementation of this application, a possible specific implementation of the enclosure frame is provided. Specifically, the geometric center of the enclosure frame is the same as the geometric center of the M waveguide apparatuses, so that a cavity may be formed. The cavity may meet, when the specific gap exists on the mounting surface corresponding to the transceiver apparatus, the condition of destroying wave transmission on the surface, to improve the isolation between the different channels (namely, different waveguide apparatuses). This resolves the problem of significant deterioration or even failure of signal transmission performance caused by the mounting deviation and the gap.

In a possible implementation, a length of the enclosure frame in a first direction is the same as a length of a waveguide apparatus in the first direction, and the first direction is a signal transmission direction in the waveguide apparatus.

In an implementation of this application, a possible specific implementation of the enclosure frame is provided. Specifically, that the length of the enclosure frame in the signal transmission direction in the waveguide apparatus is the same as a length of the waveguide apparatus in the signal transmission direction in the waveguide apparatus may be understood as that the enclosure frame has a same height as electromagnetic band gap units in the M waveguide apparatuses to form the cavity. The cavity meets, when the specific gap exists on the mounting surface corresponding to the transceiver apparatus, the condition of destroying wave transmission on the surface, to improve the isolation between the different channels (namely, the different waveguide apparatuses). This resolves the problem of significant deterioration or even failure of signal transmission performance caused by the mounting deviation and the gap.

In a possible implementation, the enclosure frame is a continuous enclosure frame, or the enclosure frame is an enclosure frame having one or more notches.

In an implementation of this application, a possible specific implementation of the enclosure frame is provided. Specifically, the enclosure frame may be a continuous enclosure frame or an enclosure frame having one or more notches. This is not limited in implementations of this application.

It may be understood that, when the enclosure frame is an enclosure frame having one or more notches, the cavity formed by the enclosure frame needs to meet, when the specific gap exists on the mounting surface corresponding to the transceiver apparatus, the condition of destroying wave transmission on the surface, to improve the isolation between the different channels (namely, the different waveguide apparatuses). Lengths and a quantity of notches in the enclosure frame are not limited in implementations of this application.

In a possible implementation, a spacing between an inner wall of the enclosure frame and a waveguide apparatus at an edge meets the following condition: 0.25λ≤b≤0.5λ, where
b indicates the spacing between the inner wall of the enclosure frame and the waveguide apparatus at the edge, and λ indicates a vacuum wavelength of an electromagnetic wave transmitted in the waveguide apparatus.

In an implementation of this application, a possible specific implementation of the enclosure frame is provided. Specifically, the spacing between the inner wall of the enclosure frame and the waveguide apparatus at the edge ranges from 0.25λ to 0.5λ, to form the cavity. The cavity meets, when the specific gap exists on the mounting surface corresponding to the transceiver apparatus, the condition of destroying wave transmission on the surface, to improve the isolation between the different channels (namely, the different waveguide apparatuses).

Optionally, the spacing between the inner wall of the enclosure frame and the waveguide apparatus at the edge may be understood as a shortest edge-to-edge distance between the inner wall of the enclosure frame and the waveguide apparatus at the edge.

In a possible implementation, a groove is provided in a third direction, and the groove is located between two adjacent waveguide apparatuses; and
the third direction is parallel to a longer side of a cross section of a waveguide apparatus in the first direction, and the first direction is the signal transmission direction in the waveguide apparatus.

In an implementation of this application, a possible specific implementation of the groove is provided. Specifically, the groove is provided in parallel to a longer side of a cross section of the waveguide apparatus in the signal transmission direction in the waveguide apparatus, and the groove is located between the two adjacent waveguide apparatuses.

It may be understood that, because the waveguide apparatus is located between the waveguide outlet of the radio frequency chip and the antenna apparatus and is configured to prevent the signal transmitted in the waveguide of the radio frequency chip from leaking at the joint between the waveguide outlet of the radio frequency chip and the antenna apparatus, and the groove is located between the two adjacent waveguide apparatuses, the groove may be understood as a shallow groove structure that is dented in a direction of a longer side of the waveguide feed port of the antenna apparatus, so that a surface current on a plane of the waveguide feed port can be effectively blocked, and the isolation between the different channels (namely, the different waveguide apparatuses) can be improved.

In a possible implementation, a distance between the groove and a center point of a waveguide apparatus meets the following condition: 0.2λ≤c≤0.3λ, where
c indicates the distance between the groove and the center point of the waveguide apparatus, and λ indicates the vacuum wavelength of the electromagnetic wave transmitted in the waveguide apparatus.

In an implementation of this application, a possible specific implementation of the groove is provided. Specifically, the distance between the groove and the center point of the waveguide apparatus ranges from 0.2λ to 0.3λ, to effectively block a surface current on a plane of the waveguide feed port, and improve the isolation between the different channels (namely, the different waveguide apparatuses).

In a possible implementation, a depth of the groove meets the following condition: 0.1λ≤d≤0.2λ, where
d indicates the depth of the groove, and λ indicates the vacuum wavelength of the electromagnetic wave transmitted in the waveguide apparatus.

In an implementation of this application, a possible specific implementation of the groove is provided. Specifically, the depth of the groove ranges from 0.1λ to 0.2λ, to effectively block a surface current on the plane of the waveguide feed port, and improve the isolation between the different channels (namely, the different waveguide apparatuses).

According to a third aspect, an embodiment of this application provides a chip. The chip includes the waveguide apparatus according to the first aspect or any one of the possible implementations of the first aspect, or includes the transceiver apparatus according to the second aspect or any one of the possible implementations of the second aspect.

According to a fourth aspect, an embodiment of this application provides a radar or a radar system. The radar or the radar system includes the waveguide apparatus according to the first aspect or any one of the possible implementations of the first aspect, or includes the transceiver apparatus according to the second aspect or any one of the possible implementations of the second aspect, or includes the chip according to the third aspect.

In a possible implementation, the radar includes but is not limited to a millimeter-wave radar.

In a possible implementation, there may be a smart sensor that is integrated with a plurality of sensors. When the smart sensor includes but is not limited to a millimeter wave detection function, the smart sensor may also be referred to as a radar or a radar system.

According to a fifth aspect, an embodiment of this application provides a terminal device. The terminal device includes the waveguide apparatus according to the first aspect or any one of the possible implementations of the first aspect, or includes the transceiver apparatus according to the second aspect or any one of the possible implementations of the second aspect, or includes the chip according to the third aspect, or includes the radar or the radar system according to the fourth aspect.

According to a sixth aspect, an embodiment of this application provides a vehicle end. The vehicle end includes the waveguide apparatus according to the first aspect or any one of the possible implementations of the first aspect, or includes the transceiver apparatus according to the second aspect or any one of the possible implementations of the second aspect, or includes the chip according to the third aspect, or includes the radar or the radar system according to the fourth aspect, or includes the terminal device according to the fifth aspect.

In embodiments of this application, disposing the electromagnetic band gap units aperiodically can resolve a problem of significant deterioration or even failure of signal transmission performance caused by a mounting deviation and a gap, implement reliable signal transmission from the waveguide outlet of the radio frequency chip to the waveguide feed port of the antenna apparatus, and improve signal transmission performance as well as robustness of the waveguide outlet of the radio frequency chip and the waveguide feed port of the antenna apparatus.

### BRIEF DESCRIPTION OF DRAWINGS

To describe the technical solutions in embodiments of this application more clearly, the following briefly describes the accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a diagram of radar distribution according to an embodiment of this application;
FIG. 2 is a diagram of an architecture of a radar according to an embodiment of this application;
FIG. 3 is a diagram of an architecture of a radar according to an embodiment of this application;
FIG. 4 is a diagram of a structure of a waveguide apparatus according to an embodiment of this application;
FIG. 5A is a three-dimensional diagram of a waveguide apparatus according to an embodiment of this application;
FIG. 5B is a diagram of an application scenario of a waveguide apparatus according to an embodiment of this application;
FIG. 5C is a diagram of a mounting surface of a waveguide apparatus according to an embodiment of this application;
FIG. 6A is a diagram of a structure of another waveguide apparatus according to an embodiment of this application;
FIG. 6B is a diagram of a structure of still another waveguide apparatus according to an embodiment of this application;
FIG. 6C is a diagram of a structure of still another waveguide apparatus according to an embodiment of this application;
FIG. 7 is a diagram of a structure of a transceiver apparatus according to an embodiment of this application;
FIG. 8A is a diagram of a structure of a transceiver apparatus according to an embodiment of this application;
FIG. 8B is a diagram of a structure of a transceiver apparatus according to an embodiment of this application;
FIG. 8C is a diagram of a structure of a transceiver apparatus according to an embodiment of this application;
FIG. 9 is a diagram of a structure of a transceiver apparatus according to an embodiment of this application;
FIG. 10A is a three-dimensional diagram of a transceiver apparatus according to an embodiment of this application;
FIG. 10B is a plan view of a transceiver apparatus according to an embodiment of this application;
FIG. 11A is an effect diagram of a return loss according to an embodiment of this application;
FIG. 11B is an effect diagram of an insertion loss according to an embodiment of this application;
FIG. 11C is an effect diagram of isolation according to an embodiment of this application;
FIG. 12A is an effect diagram of isolation according to an embodiment of this application;
FIG. 12B is an effect diagram of isolation according to an embodiment of this application; and
FIG. 12C is an effect diagram of isolation according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are intended to distinguish between different objects, but are not intended to describe a specific sequence. In addition, the terms such as "include" and "have" and any other variants thereof are intended to cover a non-exclusive inclusion. For example, processes, methods, systems, products, or devices that include a series of steps or units are not limited to enumerated steps or units, but instead, optionally further include steps or units that are not enumerated, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It can be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof, to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, "a and b", "a and c", "b and c", or "a, b, and c", where a, b, and c may be singular or plural.

As described in the background, at present, a waveguide outlet of a radio frequency chip adapted to a waveguide antenna is a rectangular waveguide port, and the waveguide outlet of the radio frequency chip needs to be vertically connected to a waveguide feed port of an antenna apparatus, to implement vertical signal transmission. However, a position at which the waveguide outlet of the radio frequency chip is vertically connected to the waveguide feed port of the antenna apparatus is prone to a mounting deviation and a gap during engineering implementation, resulting in significant deterioration or even failure of signal transmission performance. This further results in low robustness of the waveguide outlet of the radio frequency chip and the waveguide feed port of the antenna apparatus. This application provides a waveguide apparatus and a related product, and relates to the field of millimeter-wave radar technologies, to implement reliable signal transmission from a waveguide outlet of a radio frequency chip to a waveguide feed port of an antenna apparatus, and improve signal transmission performance as well as robustness of the waveguide outlet of the radio frequency chip and the waveguide feed port of the antenna apparatus.

To describe the solutions of this application more clearly, the following first describes some knowledge related to a radar.

The radar is a transliterated name of Radar in English, and is short for radio detection and ranging, namely, radio detection and ranging. The radar is used to discover a target and determine a spatial location of the target by using a radio method.

A detection medium of the radar is an electromagnetic wave, and the radar implements detection of a target, for example, distance measurement, speed measurement, or azimuth measurement, through transmission and reception of the electromagnetic wave. The radar can implement distance detection on the target based on time of flight of the electromagnetic wave. The time of flight is a time difference between receiving and transmission of the electromagnetic wave. The radar transmits an electromagnetic wave signal, receives an echo signal of the electromagnetic wave signal, and may implement distance detection on the target based on a time difference between the received echo signal and the transmitted electromagnetic wave signal and a propagation speed of the electromagnetic wave. A distance between the radar and the target may be determined according to the following formula: s=c*t/2, where s indicates the distance of the target, t indicates the time of flight, namely, a time period from transmission of the electromagnetic wave signal from the radar to receiving of the echo signal, and c indicates the speed of light.

The radar implements speed measurement on the target based on a Doppler effect (Doppler effect). A principle of the Doppler effect is as follows: When a vibration source like a sound, light, and a radio wave moves relative to an observer at a relative speed, a frequency of vibration received by the observer is different from a frequency generated by the vibration source. When the electromagnetic wave transmitted by the radar moves relative to a detected object, a frequency of the echo signal is different from a frequency of the transmitted electromagnetic wave signal. When the target approaches an antenna of the radar, the frequency of the echo signal is higher than the frequency of the transmitted electromagnetic wave signal. When the target moves away from the antenna of the radar, the frequency of the echo signal is lower than the frequency of the transmitted electromagnetic wave signal. A frequency change caused by the Doppler effect is referred to as a Doppler frequency shift, which is proportional to the relative speed and inversely proportional to the vibration frequency. Therefore, a frequency difference between the transmitted electromagnetic wave signal and the echo signal is detected, so that a moving speed of the target relative to the radar, namely, the relative speed of the target relative to the radar, can be measured.

The radar may measure an azimuth by using an amplitude method, a phase method, or the like. The amplitude method is used to measure an azimuth by using an amplitude value of an echo signal received through an antenna, and a change rule of the amplitude value depends on an antenna pattern and a scanning manner of the antenna. The phase method is used to measure an azimuth by using a phase difference between echo signals received through a plurality of antenna elements. For example, the radar receives, by using an antenna array, echo signals reflected by a same target, and calculates an azimuth of the target based on a phase difference of the echo signals.

A detection medium of a millimeter-wave radar is an electromagnetic wave within a specific wavelength range, for example, a microwave. At present, a millimeter wave (millimeter wave) and a centimeter wave (for example, a centimeter wave in a 24 GHz frequency band) adjacent to the millimeter wave in wave bands are commonly used. The millimeter wave is an electromagnetic wave with a wavelength of 1-10 millimeters (mm), and a wavelength of an electromagnetic wave in the 24 GHz frequency band is slightly greater than 10 mm. Because a wavelength of the detection medium of the millimeter-wave radar is in an overlapped wavelength range of the microwave and a far infrared wave, the detection medium of the millimeter-wave radar has characteristics of two spectrums. According to a wave propagation theory, a higher frequency indicates a shorter wavelength, a higher resolution, and a stronger penetration capability, while in this case, a loss in a propagation process is larger, and a transmission distance is shorter. On the contrary, a lower the frequency indicates a longer wavelength, a stronger diffraction capability, and a longer transmission distance. Therefore, compared with the microwave, the detection medium of the millimeter-wave radar has a high resolution, good directivity, a strong anti-interference capability, and good detection performance. Compared with infrared, the detection medium of the millimeter-wave radar has lower atmospheric attenuation, better penetration to smoke and dust, and is less affected by weather. Therefore, the millimeter-wave radar is increasingly widely used in a plurality of fields such as intelligent vehicles, drones, intelligent transportation, and industrial automation.

Based on a detection distance, the radar can be classified into a long-distance radar (long-range radar, LRR), a medium-range radar (mid/medium-range radar, MRR), and a short-range radar (short-range radar, SRR). The LRR has a high requirement for a detection distance, and has a low requirement for a width of a detection angular domain. The SRR has a low requirement for a detection distance, and has a high requirement for a width of a detection angular domain. A requirement of the MRR on a detection distance and a width of an angular domain may be understood as being between that of the LRR and that of the SRR. For example, the detection distance of the LRR may be greater than 200 meters, and the width of the angular domain may be ±15°; the detection distance of the MRR may be within 100 meters, and the width of the angular domain may be ±45°; and the detection distance of the SRR may be within 60 meters, and the width of the angular domain may be ±80°. During use, different types of radars may be mounted at different locations of a vehicle body based on a function requirement of autonomous driving and a use status of another sensor. A quantity and types of the radars may be selected based on a requirement.

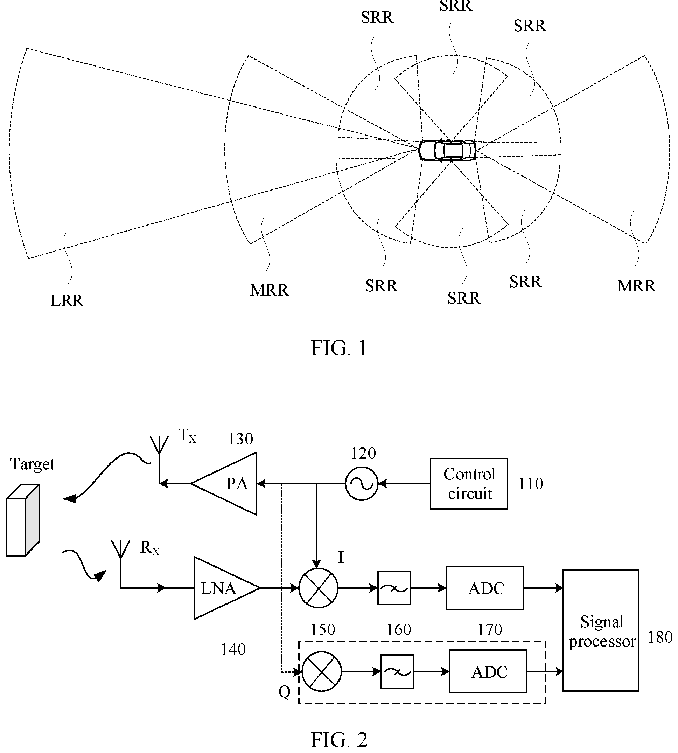

FIG. 1 is a diagram of radar distribution according to an embodiment of this application.

FIG. 1 shows possible mounting locations of several types of radars. The mounting locations are merely examples, and during actual use, more or fewer radars may be selected, and the types may also be adjusted.

As shown in FIG. 1, an LRR may be mounted on the front of a vehicle body and serve as a forward radar; an MRR may be mounted on the front or the rear of the vehicle body and serve as a forward radar or a backward radar; and an SRR may be mounted on a side of the vehicle body or four corners of the vehicle body and serve as a side radar or a corner radar. In addition, the MRR may alternatively be mounted on a side of the vehicle body or four corners of the vehicle body, and the SRR may alternatively be mounted on the front or the rear of the vehicle body.

The radar may be classified based on a modulation scheme (or a radiation scheme) of an electromagnetic wave of the radar. The modulation scheme of the electromagnetic wave of the radar includes a pulse manner and a continuous wave manner. Therefore, the radar may be classified into a pulse radar and a continuous wave radar. The continuous wave manner may be further classified into frequency shift keying (frequency shift keying, FSK), phase shift keying (phase shift keying, PSK), a constant-frequency/single-frequency continuous wave (continuous wave CW), a frequency modulated continuous wave (frequency modulated continuous wave, FMCW), multiple frequency shift keying (multiple frequency shift keying, MFSK), a phase modulated continuous wave (phase modulated continuous wave, PMCW), and the like. Featuring in multi-target detection, a high resolution, and low costs, the FMCW manner has become a mainstream radar modulation scheme.

FIG. 2 is a diagram of an architecture of a radar according to an embodiment of this application.

As shown in FIG. 2, the radar includes a control circuit 110, a signal generator 120, a power amplifier (power amplifier, PA) 130, a low noise amplifier (low noise amplifier, LNA) 140, a frequency mixer 150, a filter 160, an analog-to-digital converter (analog-to-digital converter, ADC) 170, and a signal processor 180. The signal processor, for example, a digital signal processor (digital signal processor, DSP), is usually configured to process a digital signal. The signal generator 120 generates an electromagnetic wave signal (also referred to as a radar signal) waveform under control of the control circuit 110. For example, a radar using an FMCW modulation scheme generates a sawtooth wave or a triangular wave under control of the control circuit 110. The signal generator 120 is, for example, a voltage-controlled oscillator, and the control circuit 110 is configured to generate a control voltage. The generated electromagnetic wave signal waveform is processed through conversion and modulation to a required frequency band, for example, 76-77 GHz, and is radiated to space through a transmit antenna (TX) after being amplified by the PA 130.

An electromagnetic wave signal radiated through the transmit antenna is radiated to a target and then reflected to the space, and is received by a receive antenna (RX) of the radar. After being amplified by the LNA 140, the electromagnetic wave signal is mixed with a reference signal by the frequency mixer 150. The reference signal may usually use the foregoing generated electromagnetic wave signal. After being filtered by the filter 160, the frequency mixer 150 may obtain an analog baseband signal, and obtain a digital baseband signal through sampling by the ADC 170. Signal processing of the digital baseband signal is completed in the signal processor 180, to obtain information about a range, a speed, and an angle of the target. In addition, processing such as clustering and/or tracking may be performed based on the obtained information, to further obtain information such as a trajectory, a size, and a type of the target.

The foregoing components of the radar may be integrated based on a requirement to implement miniaturization of the radar. For example, components such as the control circuit 110, the signal generator 120, the power amplifier (power amplifier, PA) 130, the low noise amplifier (low noise amplifier, LNA) 140, the frequency mixer 150, the filter 160, and the analog-to-digital converter (analog-to-digital converter, ADC) 170 may be integrated on at least one chip, for example, integrated into a monolithic microwave integrated circuit (monolithic microwave integrated circuit, MMIC).

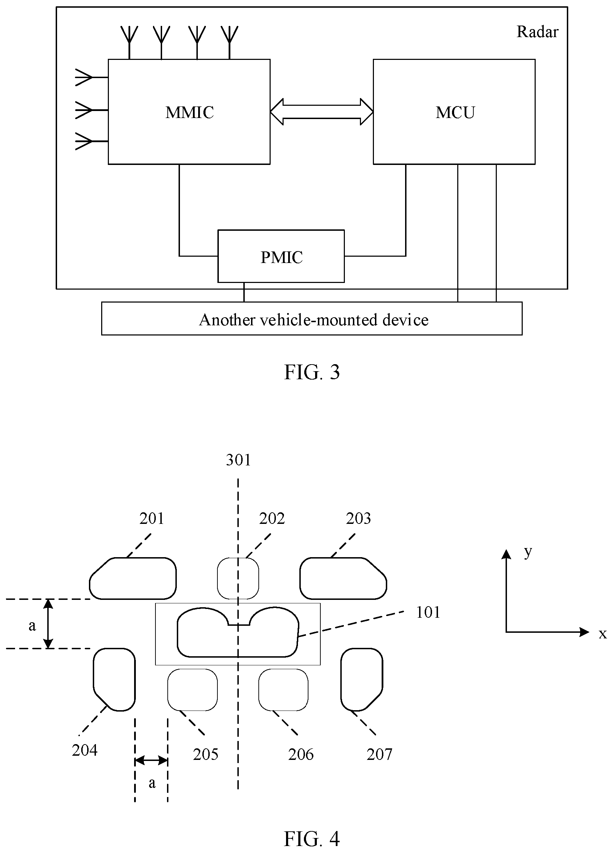

For details, refer to FIG. 3. FIG. 3 is a diagram of an architecture of a radar according to an embodiment of this application.

As shown in FIG. 3, the radar includes an MMIC, a microcontroller unit (microcontroller unit, MCU), and a power management integrated circuit (power management integrated circuit, PMIC). The MMIC may integrate a function of a radio frequency part. The MCU may integrate a function of the baseband part, for example, integrate a function of the signal processor. In addition, the MCU may provide a communication interface for communicating with another vehicle-mounted device. The PMIC is a chip that supplies power to a hardware system of the radar.

A waveguide (waveguide) is a structure used to directionally guide electromagnetic waves. In electromagnetics and communication engineering, the waveguide may be any linear structure in which electromagnetic waves are transmitted between endpoints of the waveguide. The waveguide mainly serves as a transmission line for a microwave frequency, and is used to connect a microwave transmitter and a microwave receiver to their respective antennas in a radar, a communication satellite, and a microwave radio link device. With reference to FIG. 3, it can be learned that, the waveguide is used to connect a microwave transmitter integrated in the MMIC shown in FIG. 3 to a corresponding transmit antenna, and is used to connect a microwave receiver integrated in the MMIC shown in FIG. 3 to a corresponding receive antenna, to perform transmission at the microwave frequency.

An electromagnetic band gap (electromagnetic band gap, EBG) structure is a periodic structure that can prevent propagation of an electromagnetic wave at a specific frequency. A periodic structure unit may be equivalent to a parallel LC circuit, the parallel LC circuit generates resonance at a frequency near a resonance frequency W₀, and the resonance frequency W₀ depends on a structure size of an EBG unit, a spacing between EBG units, and the like. When resonance occurs, impedance is infinite, that is, electromagnetic waves at this frequency are in a high-impedance state. Therefore, disposing an electromagnetic band gap structure between two antenna apparatuses can effectively improve isolation between the two antenna apparatuses. Common components based on this principle further include an artificial magnetic conductor (artificial magnetic conductor, AMC), a defected ground structure, a frequency selective surface (frequency selective surface, FSS), and a metamaterial.

In a millimeter-wave radar system, a three-dimensional waveguide antenna has obvious advantages over a planar printed circuit board (printed circuit board, PCB) printed antenna in terms of a loss and a broadband characteristic. An outgoing line of a radio frequency chip adapted to the PCB printed antenna is a microstrip that has a same form as a feeder of an antenna apparatus. After the microstrip and the feeder are connected at a same layer, a signal is transmitted horizontally. A waveguide outlet of a radio frequency chip adapted to the waveguide antenna is a rectangular waveguide port, and the waveguide outlet of the radio frequency chip needs to be vertically connected to a waveguide feed port of the antenna apparatus, to implement vertical signal transmission.

However, a position at which the waveguide outlet of the radio frequency chip is vertically connected to the waveguide feed port of the antenna apparatus is prone to a mounting deviation and a gap during engineering implementation, resulting in significant deterioration or even failure of signal transmission performance. This further results in low robustness of the waveguide outlet of the radio frequency chip and the waveguide feed port of the antenna apparatus.

At present, EBG units with a mushroom (Mushroom)-shaped structure or EBG units with a metal protrusion structure are usually used to implement signal transmission from the waveguide outlet of the radio frequency chip to the waveguide feed port of the antenna apparatus.

The EBG units with the Mushroom-shaped structure are formed by using a PCB process. The EBG units include a metal patch on an upper surface, a central metal hole, and a metal ground plane, and are arranged strictly based on a specific periodicity, to implement a function of blocking signal transmission. This structural form is mainly used between or around antenna arrays, to implement decoupling between antennas and improve isolation.

The EBG units with the metal protrusion structure are machined or molded, the EBG units each are a metal protrusion, and same EBG units are periodically arranged, to implement a function of blocking signal transmission. This structural form is mainly used for designing a waveguide feed network and a side wall of a transition interface, to improve performance such as an insertion loss and isolation during signal transmission.

However, the foregoing several structures used to implement signal transition from the waveguide outlet of the radio frequency chip to the waveguide feed port of the antenna apparatus are prone to the mounting deviation and the gap during engineering implementation, resulting in significant deterioration or even failure of signal transmission performance. This further results in low robustness of the waveguide outlet of the radio frequency chip and the waveguide feed port of the antenna apparatus.

In view of this, this application provides a waveguide apparatus and a related product, and relates to the field of millimeter-wave radar technologies, to effectively resolve the foregoing problem, implement reliable signal transmission from a waveguide outlet of a radio frequency chip to a waveguide feed port of an antenna apparatus, and improve signal transmission performance as well as robustness of the waveguide outlet of the radio frequency chip and the waveguide feed port of the antenna apparatus.

The following describes the waveguide apparatus and the transceiver apparatus provided in this application with reference to the accompanying drawings.

FIG. 4 is a diagram of a structure of a waveguide apparatus according to an embodiment of this application.

As shown in FIG. 4, the waveguide apparatus includes:
a first waveguide 101 and N electromagnetic band gap units (201, 202, 203, 204, 205, 206, and 207), where
N is an integer greater than 0.

For example, in the waveguide apparatus shown in FIG. 4, N=7, and correspondingly the N electromagnetic band gap units include 201, 202, 203, 204, 205, 206, and 207.

It should be understood that N=7 herein is merely an example for description, and should not constitute a limitation on embodiments of this application. N may alternatively be another integer greater than 0. This is not limited in embodiments of this application.

For example, in the waveguide apparatus shown in FIG. 4, the N electromagnetic band gap units include three different structural forms in total. The electromagnetic band gap units 201 and 203 have a same structural form, the electromagnetic band gap units 204 and 207 have a same structural form, and the electromagnetic band gap units 202, 205, and 206 have a same structural form.

It should be understood that the three structural forms presented by the N electromagnetic band gap units herein are merely used as examples for description, and should not constitute a limitation on embodiments of this application. The N electromagnetic band gap units may alternatively present other structural forms of different quantities. This is not limited in embodiments of this application.

The first waveguide 101 is a structure used to directionally guide electromagnetic waves. A specific structural form of the first waveguide 101 is not limited in embodiments of this application. The first waveguide 101 mainly serves as a transmission line for a microwave frequency, and is used to connect a microwave transmitter and a microwave receiver to their respective antennas in a radar, a communication satellite, and a microwave radio link device. For example, when the waveguide apparatus in this embodiment of this application is used in a radar, with reference to FIG. 3, the first waveguide 101 is used to connect a microwave transmitter integrated in the MMIC shown in FIG. 3 to a corresponding transmit antenna, and the first waveguide 101 is used to connect a microwave receiver integrated in the MMIC shown in FIG. 3 to a corresponding receive antenna, to perform transmission at the microwave frequency.

Signal transmission is performed between the first waveguide and the antenna apparatus. The N electromagnetic band gap units are located between the first waveguide and the antenna apparatus, and are aperiodically disposed around the first waveguide, to form an electromagnetic stopband. This prevents a signal transmitted in the first waveguide from leaking at a joint between the first waveguide and the antenna apparatus.

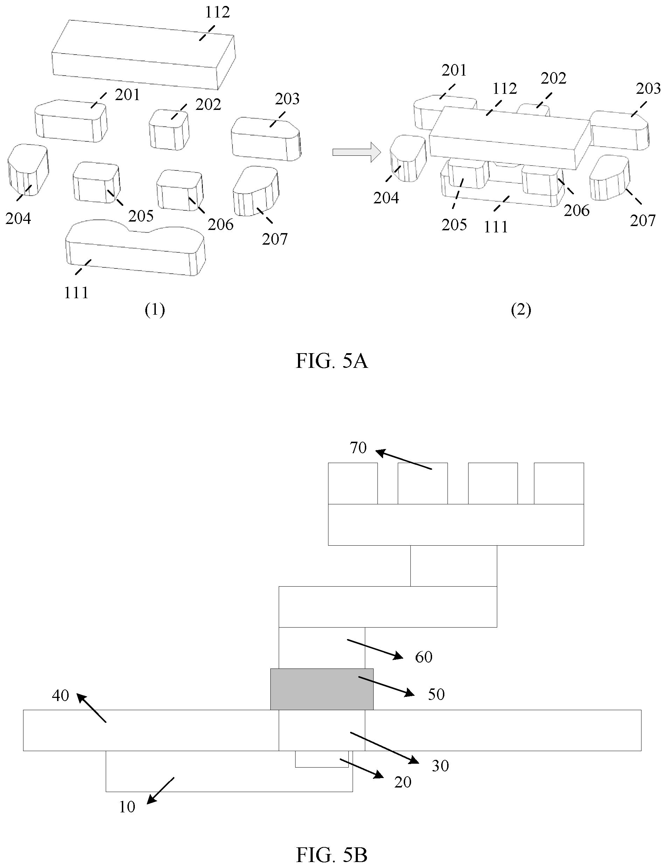

It may be understood that the diagram of the structure of the waveguide apparatus shown in FIG. 4 may be considered as a top view of the waveguide apparatus. For a specific three-dimensional structure corresponding to the waveguide apparatus, refer to FIG. 5A. FIG. 5A is a three-dimensional diagram of the waveguide apparatus according to this embodiment of this application.

As shown in FIG. 5A, (1) in FIG. 5A shows a diagram of layered three-dimensional structures of the waveguide apparatus. The structure is mainly divided into an upper layer, a middle layer, and a lower layer. The middle layer includes seven electromagnetic band gap units (201, 202, 203, 204, 205, 206, and 207) that correspond to the seven electromagnetic band gap units in FIG. 4 respectively. The lower layer includes a ridge waveguide 111 of a single channel on a radio frequency chip side, corresponding to the first waveguide 101 in FIG. 4. The upper layer includes a rectangular cross-sectional waveguide 112 of a single channel on an antenna apparatus side. The seven electromagnetic band gap units are located between the ridge waveguide 111 on the radio frequency chip side and the rectangular cross-sectional waveguide 112 on the antenna apparatus side, and are aperiodically disposed around a ridge waveguide port on the radio frequency chip side and/or the rectangular cross-sectional waveguide port on the antenna apparatus side, to form an electromagnetic stopband. This prevents a signal transmitted in the ridge waveguide on the radio frequency chip side from leaking at a joint between the ridge waveguide port on the radio frequency chip side and the rectangular cross-sectional waveguide port on the antenna apparatus side.

In the waveguide apparatus shown in (1) in FIG. 5A, after passing through the electromagnetic stopband formed by aperiodically arranging the seven electromagnetic band gap units, a radio frequency signal is transmitted from the ridge waveguide port on the radio frequency chip side to the rectangular cross-sectional waveguide on the antenna apparatus side. This can resolve a problem of significant deterioration or even failure of signal transmission performance caused by a mounting deviation and a gap between the ridge waveguide port on the radio frequency chip side and the rectangular cross-sectional waveguide port on the antenna apparatus side, implement reliable signal transmission from a waveguide outlet of the radio frequency chip to a waveguide feed port of the antenna apparatus, and improve signal transmission performance as well as robustness of the waveguide outlet of the radio frequency chip and the waveguide feed port of the antenna apparatus.

It may be understood that a diagram of a combined structure of the waveguide apparatus shown in (2) in FIG. 5A may be obtained by mounting layered structures shown in (1) in FIG. 5A. The combined structure can resolve the problem of significant deterioration or even failure of signal transmission performance caused by the mounting deviation and the gap between the ridge waveguide port on the radio frequency chip side and the rectangular cross-sectional waveguide port on the antenna apparatus side.

It may be understood that the waveguide apparatus shown in FIG. 4 and FIG. 5A may be used in a millimeter-wave radar or a millimeter-wave radar system, including but not limited to those shown in FIG. 1 to FIG. 3.

For details, refer to FIG. 5B. FIG. 5B is a diagram of an application scenario of the waveguide apparatus according to this embodiment of this application.

FIG. 5B is a diagram of a structure of a single channel of the millimeter-wave radar or the millimeter-wave radar system in a scenario in which the waveguide apparatus shown in FIG. 4 and FIG. 5A is used in the millimeter-wave radar or the millimeter-wave radar system.

The structure of the single channel mainly includes a radio frequency chip 10, a chip waveguide cavity 20, a PCB board 40, a PCB transition waveguide cavity 30, an electromagnetic stopband 50, a waveguide feeder cavity 60 of the antenna apparatus, and an antenna cavity 70 of the antenna apparatus. It may be understood that the electromagnetic stopband 50 in FIG. 5B includes the N electromagnetic band gap units in the waveguide apparatus shown in FIG. 4 and FIG. 5A.

The radio frequency chip 10 and the chip waveguide cavity 20 may be considered as a whole, and the chip waveguide cavity 20 may be considered as a waveguide cavity in the radio frequency chip 10. The PCB board 40 and the PCB transition waveguide cavity 30 may be considered as a whole, and the PCB transition waveguide cavity 30 may be considered as a waveguide cavity in the PCB board 40.

The chip waveguide cavity 20, the PCB transition waveguide cavity 30, the electromagnetic stopband 50, the waveguide feeder cavity 60 of the antenna apparatus, and the antenna cavity 70 of the antenna apparatus are sequentially connected to form the single channel of the millimeter-wave radar or the millimeter-wave radar system. A signal of the radio frequency chip 10 is output from the chip waveguide cavity 20, successively passes through the PCB transition waveguide cavity 30 and the electromagnetic stopband 50, arrives at the antenna apparatus side, is input into the antenna apparatus from the waveguide feeder cavity 60 of the antenna apparatus, and is transmitted from the antenna cavity 70 of the antenna apparatus.

Optionally, the chip waveguide cavity 20 and the PCB transition waveguide cavity 30 may alternatively be considered as a whole, that is, a waveguide cavity on a radio frequency chip 10 side. The electromagnetic stopband 50 is located between the waveguide cavity (namely, the first waveguide) on the radio frequency chip 10 side and the antenna apparatus, and is used to transmit a signal in the waveguide cavity on the radio frequency chip 10 side to the antenna apparatus, and prevent the signal transmitted in the waveguide cavity on the radio frequency chip 10 side from leaking at a joint between the waveguide cavity on the radio frequency chip 10 side and the antenna apparatus, so as to implement reliable signal transmission from the waveguide outlet of the radio frequency chip to the waveguide feed port of the antenna apparatus.

At present, a waveguide outlet of a radio frequency chip adapted to a waveguide antenna is a rectangular waveguide port, and the waveguide outlet of the radio frequency chip needs to be vertically connected to the waveguide feed port of the antenna apparatus, to implement vertical signal transmission. However, a position at which the waveguide outlet of the radio frequency chip is vertically connected to the waveguide feed port of the antenna apparatus is prone to a mounting deviation and a gap during engineering implementation, resulting in significant deterioration or even failure of signal transmission performance. This further results in low robustness of the waveguide outlet of the radio frequency chip and the waveguide feed port of the antenna apparatus.

However, in this embodiment of this application, the N electromagnetic band gap units are disposed between the first waveguide and the antenna apparatus, and are aperiodically disposed around the first waveguide, to form an electromagnetic stopband. This can resolve the problem of significant deterioration or even failure of signal transmission performance caused by the mounting deviation and the gap, implement reliable signal transmission from the waveguide outlet of the radio frequency chip to the waveguide feed port of the antenna apparatus, and improve signal transmission performance as well as robustness of the waveguide outlet of the radio frequency chip and the waveguide feed port of the antenna apparatus.

The following provides several possible examples for how the N electromagnetic band gap units in the waveguide apparatus are aperiodically disposed around the first waveguide.

### Example 1

Two adjacent electromagnetic band gap units in the N electromagnetic band gap units have different cross-sectional shapes.

Optionally, a cross section of the two adjacent electromagnetic band gap units may be a cross section perpendicular to a signal transmission direction in the first waveguide, or may be a cross section parallel to a signal transmission direction in the first waveguide. This is not limited in embodiments of this application.

With reference to the waveguide apparatus shown in FIG. 4, it can be learned that, in the N electromagnetic band gap units, adjacent electromagnetic band gap units 201 and 202 have different cross-sectional shapes, adjacent electromagnetic band gap units 204 and 205 also have different cross-sectional shapes, adjacent electromagnetic band gap units 203 and 207 also have different cross-sectional shapes, and so on. Details are not exhaustive herein.

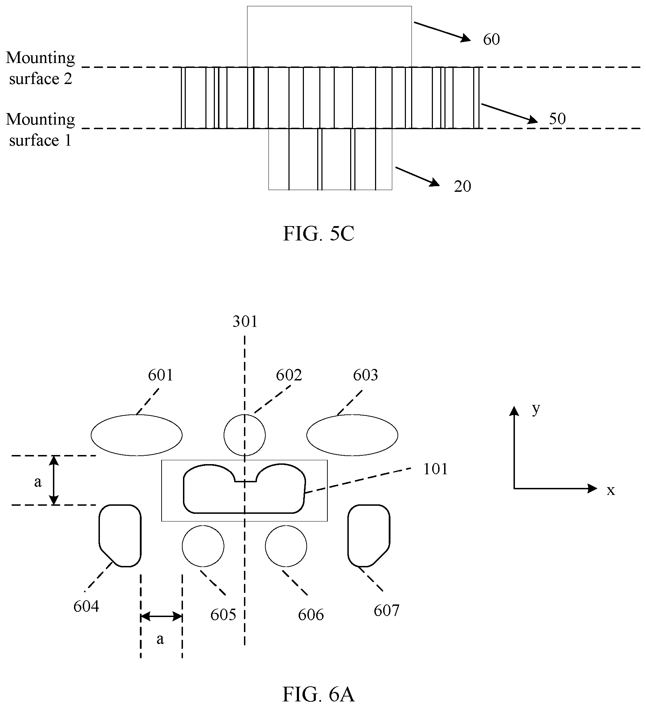

With reference to a waveguide apparatus shown in FIG. 6A, it can be learned that, in N electromagnetic band gap units, adjacent electromagnetic band gap units 601 and 602 have different cross-sectional shapes, adjacent electromagnetic band gap units 604 and 605 also have different cross-sectional shapes, adjacent electromagnetic band gap units 603 and 607 also have different cross-sectional shapes, and so on. Details are not exhaustive herein.

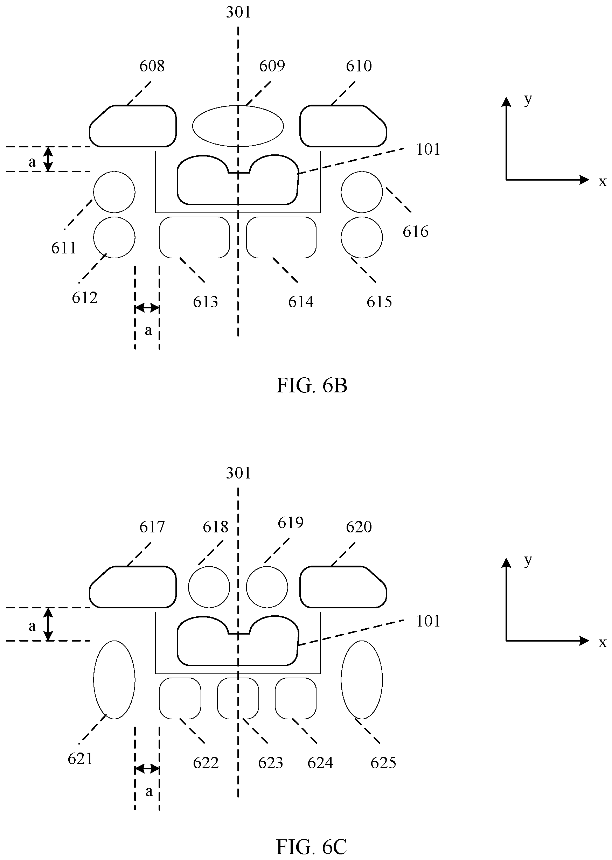

With reference to a waveguide apparatus shown in FIG. 6B, it can be learned that, in N electromagnetic band gap units, adjacent electromagnetic band gap units 608 and 609 have different cross-sectional shapes, adjacent electromagnetic band gap units 612 and 613 also have different cross-sectional shapes, adjacent electromagnetic band gap units 610 and 616 also have different cross-sectional shapes, and so on. Details are not exhaustive herein.

With reference to a waveguide apparatus shown in FIG. 6C, it can be learned that, in N electromagnetic band gap units, adjacent electromagnetic band gap units 617 and 618 have different cross-sectional shapes, adjacent electromagnetic band gap units 621 and 622 also have different cross-sectional shapes, adjacent electromagnetic band gap units 620 and 625 also have different cross-sectional shapes, and so on. Details are not exhaustive herein.

It may be understood that, in Example 1, the two adjacent electromagnetic band gap units in the N electromagnetic band gap units have different cross-sectional shapes, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

### Example 2

The N electromagnetic band gap units are mirror-symmetrically arranged.

Optionally, the N electromagnetic band gap units are mirror-symmetrically arranged on a plane perpendicular to a signal transmission direction in the first waveguide.

With reference to the waveguide apparatus shown in FIG. 4, it can be learned that the electromagnetic band gap units 201, 202, 204, and 205 are mirror-symmetrical to the electromagnetic band gap units 203, 202, 207, and 206 with respect to a dashed line 301.

With reference to the waveguide apparatus shown in FIG. 6A, it can be learned that the electromagnetic band gap units 601, 602, 604, and 605 are mirror-symmetrical to the electromagnetic band gap units 603, 602, 607, and 606 with respect to a dashed line 301.

With reference to the waveguide apparatus shown in FIG. 6B, it can be learned that electromagnetic band gap units 608, 609, 611, 612, and 613 are mirror-symmetrical to the electromagnetic band gap units 610, 609, 616, 615, and 614 with respect to a dashed line 301.

With reference to the waveguide apparatus shown in FIG. 6C, it can be learned that the electromagnetic band gap units 617, 618, 621, 622, and 623 are mirror-symmetrical to the electromagnetic band gap units 620, 619, 625, 624, and 623 with respect to a dashed line 301.

It may be understood that, in Example 2, the N electromagnetic band gap units are mirror-symmetrically arranged, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

### Example 3

Two groups of adjacent electromagnetic band gap units in the N electromagnetic band gap units have different spacings.

Optionally, a spacing between each of the two groups of adjacent electromagnetic band gap units may be understood as a spacing between center points of each of the two groups of adjacent electromagnetic band gap units, or may be understood as an edge-to-edge spacing between the two groups of adjacent electromagnetic band gap units (namely, a nearest edge-to-edge spacing). This is not limited in embodiments of this application.

With reference to the waveguide apparatus shown in FIG. 4, it can be learned that, in the N electromagnetic band gap units, there are adjacent electromagnetic band gap units 201 and 202 and adjacent electromagnetic band gap units 204 and 205, and the two groups of adjacent electromagnetic band gap units have different spacings; there are also adjacent electromagnetic band gap units 205 and 206 and adjacent electromagnetic band gap units 206 and 207, and the two groups of adjacent electromagnetic band gap units have different spacings; there are also adjacent electromagnetic band gap units 206 and 207 and adjacent electromagnetic band gap units 207 and 203, and the two groups of adjacent electromagnetic band gap units have different spacings; and so on. Details are not exhaustive herein.

With reference to the waveguide apparatus shown in FIG. 6A, it can be learned that, in the N electromagnetic band gap units, there are adjacent electromagnetic band gap units 601 and 602 and adjacent electromagnetic band gap units 604 and 605, and the two groups of adjacent electromagnetic band gap units have different spacings; there are also adjacent electromagnetic band gap units 605 and 606 and adjacent electromagnetic band gap units 606 and 607, and the two groups of adjacent electromagnetic band gap units have different spacings; there are also adjacent electromagnetic band gap units 606 and 607 and adjacent electromagnetic band gap units 607 and 603, and the two groups of adjacent electromagnetic band gap units have different spacings; and so on. Details are not exhaustive herein.

With reference to the waveguide apparatus shown in FIG. 6B, it can be learned that, in the N electromagnetic band gap units, there are adjacent electromagnetic band gap units 608 and 609 and adjacent electromagnetic band gap units 612 and 613, and the two groups of adjacent electromagnetic band gap units have different spacings; there are also adjacent electromagnetic band gap units 612 and 613 and adjacent electromagnetic band gap units 613 and 614, and the two groups of adjacent electromagnetic band gap units have different spacings; there are also adjacent electromagnetic band gap units 615 and 616 and adjacent electromagnetic band gap units 616 and 610, and the two groups of adjacent electromagnetic band gap units have different spacings; and so on. Details are not exhaustive herein.

With reference to the waveguide apparatus shown in FIG. 6C, it can be learned that, in N electromagnetic band gap units, there are adjacent electromagnetic band gap units 617 and 618 and adjacent electromagnetic band gap units 621 and 622, and the two groups of adjacent electromagnetic band gap units have different spacings; there are also adjacent electromagnetic band gap units 621 and 622 and adjacent electromagnetic band gap units 622 and 623, and the two groups of adjacent electromagnetic band gap units have different spacings; there are also adjacent electromagnetic band gap units 624 and 625 and adjacent electromagnetic band gap units 625 and 620, and the two groups of adjacent electromagnetic band gap units have different spacings; and so on. Details are not exhaustive herein.

It may be understood that, in Example 3, the two groups of adjacent electromagnetic band gap units in the N electromagnetic band gap units have different spacings, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

### Example 4

The N electromagnetic band gap units are arranged in a rectangular configuration around the first waveguide.

Optionally, the N electromagnetic band gap units may alternatively be arranged around the first waveguide in a square configuration, a circular configuration, an elliptical configuration, or the like, provided that the N electromagnetic band gap units are aperiodically disposed around the first waveguide, to form the electromagnetic stopband. This is not limited in embodiments of this application.

With reference to the waveguide apparatus shown in FIG. 4, it can be learned that the electromagnetic band gap units 201, 202, 203, 204, 205, 206, and 207 are arranged in a rectangular configuration around the first waveguide, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

With reference to the waveguide apparatus shown in FIG. 6A, it can be learned that the electromagnetic band gap units 601, 602, 603, 604, 605, 606, and 607 are arranged in a rectangular configuration around the first waveguide, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

With reference to the waveguide apparatus shown in FIG. 6B, it can be learned that the electromagnetic band gap units 608, 609, 610, 611, 612, 613, 614, 615, and 616 are arranged in a rectangular configuration around the first waveguide, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

With reference to the waveguide apparatus shown in FIG. 6C, it can be learned that the electromagnetic band gap units 617, 618, 619, 620, 621, 622, 623, 624, and 625 are arranged in a rectangular configuration around the first waveguide, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

### Example 5

Two adjacent electromagnetic band gap units in the N electromagnetic band gap units have different cross-sectional areas.

Optionally, a cross section of the two adjacent electromagnetic band gap units may be a cross section perpendicular to a signal transmission direction in the first waveguide, or may be a cross section parallel to a signal transmission direction in the first waveguide. This is not limited in embodiments of this application.

With reference to the waveguide apparatus shown in FIG. 4, it can be learned that, in the N electromagnetic band gap units, the adjacent electromagnetic band gap units 201 and 202 have different cross-sectional areas, the adjacent electromagnetic band gap units 201 and 204 also have different cross-sectional areas, the adjacent electromagnetic band gap units 206 and 207 also have different cross-sectional areas, and so on. Details are not exhaustive herein.

With reference to the waveguide apparatus shown in FIG. 6A, it can be learned that, in the N electromagnetic band gap units, the adjacent electromagnetic band gap units 601 and 602 have different cross-sectional areas, the adjacent electromagnetic band gap units 601 and 604 also have different cross-sectional areas, the adjacent electromagnetic band gap units 606 and 607 also have different cross-sectional areas, and so on. Details are not exhaustive herein.

With reference to the waveguide apparatus shown in FIG. 6B, it can be learned that, in the N electromagnetic band gap units, the adjacent electromagnetic band gap units 608 and 609 have different cross-sectional areas, the adjacent electromagnetic band gap units 608 and 611 also have different cross-sectional areas, the adjacent electromagnetic band gap units 614 and 615 also have different cross-sectional areas, and so on. Details are not exhaustive herein.

With reference to the waveguide apparatus shown in FIG. 6C, it can be learned that, in the N electromagnetic band gap units, the adjacent electromagnetic band gap units 617 and 618 have different cross-sectional areas, the adjacent electromagnetic band gap units 617 and 621 also have different cross-sectional areas, the adjacent electromagnetic band gap units 624 and 625 also have different cross-sectional areas, and so on. Details are not exhaustive herein.

It may be understood that, in Example 5, the two adjacent electromagnetic band gap units in the N electromagnetic band gap units have different cross-sectional areas, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

### Example 6

The N electromagnetic band gap units are protrusion structures with rectangular cut corners.

With reference to the waveguide apparatus shown in FIG. 4, it can be learned that the electromagnetic band gap units 201, 203, 204, and 207 in the N electromagnetic band gap units are all protrusion structures with rectangular cut corners.

Optionally, the N electromagnetic band gap units each may be a protrusion structure with one rectangular cut corner, or may be a protrusion structure with a plurality of rectangular cut corners. This is not limited in embodiments of this application. When the electromagnetic band gap units each have only one rectangular cut corner, the rectangular cut corner may be any one of a rectangular upper left cut corner, a rectangular upper right cut corner, a rectangular lower left cut corner, or a rectangular lower right cut corner. This is not limited in embodiments of this application. For example, the electromagnetic band gap unit 201 in FIG. 4 is a protrusion structure with a rectangular upper left cut corner, the electromagnetic band gap unit 203 in FIG. 4 is a protrusion structure with a rectangular upper right cut corner, the electromagnetic band gap unit 204 in FIG. 4 is a protrusion structure with a rectangular lower left cut corner, and the electromagnetic band gap unit 207 in FIG. 4 is a protrusion structure with a rectangular lower right cut corner. When the electromagnetic band gap units each have a plurality of rectangular cut corners, the plurality of rectangular cut corners may be any two or more of a rectangular upper left cut corner, a rectangular upper right cut corner, a rectangular lower left cut corner, or a rectangular lower right cut corner. This is not limited in embodiments of this application.

With reference to the waveguide apparatus shown in FIG. 6A, it can be learned that the electromagnetic band gap unit 604 in FIG. 6A is a protrusion structure with a rectangular lower left cut corner, and the electromagnetic band gap unit 607 in FIG. 6A is a protrusion structure with a rectangular lower right cut corner.

With reference to the waveguide apparatus shown in FIG. 6B, it can be learned that the electromagnetic band gap unit 608 in FIG. 6B is a protrusion structure with a rectangular upper left cut corner, and the electromagnetic band gap unit 610 in FIG. 6B is a protrusion structure with a rectangular upper right cut corner.

With reference to the waveguide apparatus shown in FIG. 6C, it can be learned that the electromagnetic band gap unit 617 in FIG. 6C is a protrusion structure with a rectangular upper left cut corner, and the electromagnetic band gap unit 620 in FIG. 6C is a protrusion structure with a rectangular upper right cut corner.

Optionally, the N electromagnetic band gap units may alternatively be protrusion structures whose cut corners are in a shape of a square, a circle, an ellipse, or the like. This is not limited in embodiments of this application.

Optionally, the N electromagnetic band gap units may alternatively be protrusion structures whose cut corners are in a shape of a rectangle, a square, a circle, an ellipse, or the like that has a rounded corner. This is not limited in embodiments of this application.

It may be understood that, in Example 6, the N electromagnetic band gap units are protrusion structures with rectangular cut corners, and the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

### Example 7

Two groups of adjacent electromagnetic band gap units in the N electromagnetic band gap units have a same spacing.

Optionally, a spacing between each of the two groups of adjacent electromagnetic band gap units may be understood as a spacing between center points of each of the two groups of adjacent electromagnetic band gap units, or may be understood as an edge-to-edge spacing between the two groups of adjacent electromagnetic band gap units (namely, a nearest edge-to-edge spacing). This is not limited in embodiments of this application.

It may be understood that, when two adjacent electromagnetic band gap units in the N electromagnetic band gap units have different cross-sectional shapes, or when the N electromagnetic band gap units are mirror-symmetrically arranged, or when two adjacent electromagnetic band gap units in the N electromagnetic band gap units have different cross-sectional areas, or when the N electromagnetic band gap units are protrusion structures with rectangular cut corners, the two groups of adjacent electromagnetic band gap units in the N electromagnetic band gap units have a same spacing, so that the N electromagnetic band gap units are aperiodically disposed around the first waveguide, to form the electromagnetic stopband. This can prevent the signal transmitted in the first waveguide from leaking at the joint between the first waveguide and the antenna apparatus, and can resolve the problem of significant deterioration or even failure of signal transmission performance caused by the mounting deviation and the gap.

With reference to the waveguide apparatus shown in FIG. 4, it can be learned that, when the adjacent electromagnetic band gap units 201 and 202 in the N electromagnetic band gap units have different cross-sectional shapes, two groups of adjacent electromagnetic band gap units in the N electromagnetic band gap units have a same spacing (a spacing between the adjacent electromagnetic band gap units 204 and 205 and a spacing between the adjacent electromagnetic band gap units 207 and 206). In this case, the N electromagnetic band gap units may be aperiodically disposed around the first waveguide. Alternatively, when the electromagnetic band gap units 201, 202, 204, and 205 are mirror-symmetrical to the electromagnetic band gap units 203, 202, 207, and 206 in the N electromagnetic band gap units with respect to the dashed line 301, two groups of adjacent electromagnetic band gap units in the N electromagnetic band gap units have a same spacing (a spacing between the adjacent electromagnetic band gap units 204 and 205 and a spacing between the adjacent electromagnetic band gap units 207 and 206). In this case, the N electromagnetic band gap units may be aperiodically disposed around the first waveguide. Alternatively, when the adjacent electromagnetic band gap units 201 and 202 in the N electromagnetic band gap units have different cross-sectional areas, two groups of adjacent electromagnetic band gap units in the N electromagnetic band gap units have a same spacing (a spacing between adjacent electromagnetic band gap units 204 and 205 and a spacing between the adjacent electromagnetic band gap units 207 and 206). In this case, the N electromagnetic band gap units may be aperiodically disposed around the first waveguide. Alternatively, when the electromagnetic band gap units 201, 203, 204, and 207 in the N electromagnetic band gap units are all protrusion structures with rectangular cut corners, two groups of adjacent electromagnetic band gap units in the N electromagnetic band gap units have a same spacing (a spacing between the adjacent electromagnetic band gap units 204 and 205 and a spacing between the adjacent electromagnetic band gap units 207 and 206). In this case, the N electromagnetic band gap units may be aperiodically disposed around the first waveguide. Details are not exhaustive herein.

With reference to the waveguide apparatus shown in FIG. 6A, it can be learned that, when the adjacent electromagnetic band gap units 601 and 602 in the N electromagnetic band gap units have different cross-sectional shapes, two groups of adjacent electromagnetic band gap units in the N electromagnetic band gap units have a same spacing (a spacing between the adjacent electromagnetic band gap units 604 and 605 and a spacing between the adjacent electromagnetic band gap units 607 and 606). In this case, the N electromagnetic band gap units may be aperiodically disposed around the first waveguide. Alternatively, when the electromagnetic band gap units 601, 602, 604, and 605 are mirror-symmetrical to the electromagnetic band gap units 603, 602, 607, and 606 in the N electromagnetic band gap units with respect to the dashed line 301, two groups of adjacent electromagnetic band gap units in the N electromagnetic band gap units have a same spacing (a spacing between the adjacent electromagnetic band gap units 604 and 605 and a spacing between the adjacent electromagnetic band gap units 607 and 606). In this case, the N electromagnetic band gap units may be aperiodically disposed around the first waveguide. Alternatively, when the adjacent electromagnetic band gap units 601 and 602 in the N electromagnetic band gap units have different cross-sectional areas, two groups of adjacent electromagnetic band gap units in the N electromagnetic band gap units have a same spacing (a spacing between adjacent electromagnetic band gap units 604 and 605 and a spacing between the adjacent electromagnetic band gap units 607 and 606). In this case, the N electromagnetic band gap units may be aperiodically disposed around the first waveguide. Alternatively, when the electromagnetic band gap units 604 and 607 in the N electromagnetic band gap units are both protrusion structures with rectangular cut corners, two groups of adjacent electromagnetic band gap units in the N electromagnetic band gap units have a same spacing (a spacing between the adjacent electromagnetic band gap units 604 and 605 and a spacing between the adjacent electromagnetic band gap units 607 and 606). In this case, the N electromagnetic band gap units may be aperiodically disposed around the first waveguide. Details are not exhaustive herein.

With reference to the waveguide apparatus shown in FIG. 6B, it can be learned that, when the adjacent electromagnetic band gap units 608 and 609 in the N electromagnetic band gap units have different cross-sectional shapes, two groups of adjacent electromagnetic band gap units in the N electromagnetic band gap units have a same spacing (a spacing between the adjacent electromagnetic band gap units 612 and 613 and a spacing between the adjacent electromagnetic band gap units 615 and 614). In this case, the N electromagnetic band gap units may be aperiodically disposed around the first waveguide. Alternatively, when the electromagnetic band gap units 608, 609, 611, 612, and 613 are mirror-symmetrical to the electromagnetic band gap units 610, 609, 616, 615, and 614 in the N electromagnetic band gap units with respect to the dashed line 301, two groups of adjacent electromagnetic band gap units in the N electromagnetic band gap units have a same spacing (a spacing between the adjacent electromagnetic band gap units 612 and 613 and a spacing between the adjacent electromagnetic band gap units 615 and 614). In this case, the N electromagnetic band gap units may be aperiodically disposed around the first waveguide. Alternatively, when the adjacent electromagnetic band gap units 608 and 609 in the N electromagnetic band gap units have different cross-sectional areas, two groups of adjacent electromagnetic band gap units in the N electromagnetic band gap units have a same spacing (a spacing between adjacent electromagnetic band gap units 612 and 613 and a spacing between the adjacent electromagnetic band gap units 615 and 614). In this case, the N electromagnetic band gap units may be aperiodically disposed around the first waveguide. Alternatively, when the electromagnetic band gap units 608 and 610 in the N electromagnetic band gap units are both protrusion structures with rectangular cut corners, two groups of adjacent electromagnetic band gap units in the N electromagnetic band gap units have a same spacing (a spacing between the adjacent electromagnetic band gap units 612 and 613 and a spacing between the adjacent electromagnetic band gap units 615 and 614). In this case, the N electromagnetic band gap units may be aperiodically disposed around the first waveguide. Details are not exhaustive herein.

With reference to the waveguide apparatus shown in FIG. 6C, it can be learned that, when the adjacent electromagnetic band gap units 617 and 618 in the N electromagnetic band gap units have different cross-sectional shapes, two groups of adjacent electromagnetic band gap units in the N electromagnetic band gap units have a same spacing (a spacing between the adjacent electromagnetic band gap units 621 and 622 and a spacing between the adjacent electromagnetic band gap units 625 and 624). In this case, the N electromagnetic band gap units may be aperiodically disposed around the first waveguide. Alternatively, when the electromagnetic band gap units 617, 618, 621, 622, and 623 are mirror-symmetrical to the electromagnetic band gap units 620, 619, 625, 624, and 623 in the N electromagnetic band gap units with respect to the dashed line 301, two groups of adjacent electromagnetic band gap units in the N electromagnetic band gap units have a same spacing (a spacing between the adjacent electromagnetic band gap units 621 and 622 and a spacing between the adjacent electromagnetic band gap units 625 and 624). In this case, the N electromagnetic band gap units may be aperiodically disposed around the first waveguide. Alternatively, when the adjacent electromagnetic band gap units 617 and 618 in the N electromagnetic band gap units have different cross-sectional areas, two groups of adjacent electromagnetic band gap units in the N electromagnetic band gap units have a same spacing (a spacing between adjacent electromagnetic band gap units 621 and 622 and a spacing between the adjacent electromagnetic band gap units 625 and 624). In this case, the N electromagnetic band gap units may be aperiodically disposed around the first waveguide. Alternatively, when the electromagnetic band gap units 617 and 620 in the N electromagnetic band gap units are both protrusion structures with rectangular cut corners, two groups of adjacent electromagnetic band gap units in the N electromagnetic band gap units have a same spacing (a spacing between the adjacent electromagnetic band gap units 621 and 622 and a spacing between the adjacent electromagnetic band gap units 625 and 624). In this case, the N electromagnetic band gap units may be aperiodically disposed around the first waveguide. Details are not exhaustive herein.

It should be understood that the foregoing several examples (Example 1 to Example 7) are merely possible cases in which the N electromagnetic band gap units are aperiodically disposed around the first waveguide, and should not constitute a limitation on embodiments of this application. Other possible cases in which the N electromagnetic band gap units are aperiodically disposed around the first waveguide and that are obtained based on an appropriate variant, combination, or supplement of the foregoing several examples (Example 1 to Example 7) fall within the protection scope of embodiments of this application.

In a possible embodiment, the N electromagnetic band gap units have a same length in a first direction.

The first direction is a signal transmission direction in the first waveguide.

Optionally, with reference to FIG. 5B, it can be learned that the first direction is a transmission direction in which a signal of the radio frequency chip 10 is output from the chip waveguide cavity 20, successively passes through the PCB transition waveguide cavity 30 and the electromagnetic stopband 50, and arrives at the antenna apparatus side.

It may be understood that the N electromagnetic band gap units has a same height in the first direction, to form the electromagnetic stopband. This prevents the signal transmitted in the first waveguide from leaking at the joint between the first waveguide and the antenna apparatus.

In a possible embodiment, at least two of the N electromagnetic band gap units have different lengths in a second direction.

The second direction is perpendicular to the signal transmission direction in the first waveguide.

Optionally, with reference to FIG. 4 and FIG. 5B, it can be learned that the diagram of the structure of the waveguide apparatus shown as FIG. 4 may be considered as a top view of the waveguide apparatus, and the electromagnetic stopband 50 in FIG. 5B may be considered as a main view of the N electromagnetic band gap units in the waveguide apparatus shown in FIG. 4. The second direction is perpendicular to the signal transmission direction in the first waveguide. To be specific, the second direction is perpendicular to a transmission direction in which a signal of the radio frequency chip 10 is output from the chip waveguide cavity 20, sequentially passes through the PCB transition waveguide cavity 30 and the electromagnetic stopband 50, and arrives at the antenna apparatus side. Therefore, the second direction may be any direction on a plane formed by an x-axis and a y-axis in FIG. 4.

For example, when the second direction is the x-axis direction in FIG. 4, in the N electromagnetic band gap units, the electromagnetic band gap unit 201 and the electromagnetic band gap unit 202 have different lengths in the second direction, the electromagnetic band gap unit 201 and the electromagnetic band gap unit 204 also have different lengths in the second direction, and so on. Details are not exhaustive herein.

For example, when the second direction is the y-axis direction in FIG. 4, in the N electromagnetic band gap units, the electromagnetic band gap unit 204 and the electromagnetic band gap unit 205 have different lengths in the second direction, the electromagnetic band gap unit 204 and the electromagnetic band gap unit 201 also have different lengths in the second direction, and so on. Details are not exhaustive herein.

It may be understood that at least two electromagnetic band gap units in the N electromagnetic band gap units are unequal in length, to form an electromagnetic stopband. This resolves a problem of significant deterioration or even failure of signal transmission performance caused by a mounting deviation and a gap.

In a possible embodiment, an edge-to-edge spacing between any two adjacent electromagnetic band gap units in the N electromagnetic band gap units meets the following condition: 0.15λ≤a≤0.3λ, where
a indicates the edge-to-edge spacing between the any two adjacent electromagnetic band gap units in the N electromagnetic band gap units, and λ indicates a vacuum wavelength of an electromagnetic wave transmitted in the first waveguide.

Optionally, the edge-to-edge spacing between the any two adjacent electromagnetic band gap units may be understood as a shortest edge-to-edge spacing between the any two adjacent electromagnetic band gap units.

Optionally, with reference to FIG. 4, it can be learned that, a spacing a between an edge of the electromagnetic band gap units 201 and an edge of the electromagnetic band gap units 204 in the N electromagnetic band gap units meets the foregoing condition, a spacing a between an edge of the electromagnetic band gap units 204 and an edge of the electromagnetic band gap units 205 in the N electromagnetic band gap units also meets the foregoing condition, and so on. Details are not exhaustive herein.

It may be understood that the edge-to-edge spacing between the any two adjacent electromagnetic band gap units in the N electromagnetic band gap units ranges from 0.15λ to 0.3λ, to form the electromagnetic stopband. This prevents the signal transmitted in the first waveguide from leaking at the joint between the first waveguide and the antenna apparatus.

In a possible embodiment, the first waveguide is a ridge waveguide.

Further, the first waveguide is a ridge waveguide of the radio frequency chip. After passing through the N electromagnetic band gap units that are aperiodically arranged, a radio frequency signal is transmitted from a ridge waveguide port of the radio frequency chip (namely, a first waveguide port) to the antenna apparatus, to implement reliable signal transmission from a ridge waveguide outlet of the radio frequency chip to the waveguide feed port of the antenna apparatus, and improve signal transmission performance as well as robustness of the ridge waveguide outlet of the radio frequency chip and the waveguide feed port of the antenna apparatus.

In a possible embodiment, the N electromagnetic band gap units are disposed on an antenna apparatus side or a first waveguide side.

For details, refer to FIG. 5C. FIG. 5C is a diagram of a mounting surface of the waveguide apparatus according to this embodiment of this application.

As shown in FIG. 5C, the electromagnetic stopband 50 (namely, the N electromagnetic band gap units) is located between an antenna apparatus 60 and a first waveguide 20. It may be understood that the electromagnetic stopband 50 (namely, the N electromagnetic band gap units) in FIG. 5C may be considered as a main view corresponding to the N electromagnetic band gap units in the waveguide apparatus shown in FIG. 4 and FIG. 5A.

Optionally, the antenna apparatus 60 in FIG. 5C may specifically include a waveguide feeder cavity and an antenna cavity, and the waveguide feeder cavity of the antenna apparatus is connected to the electromagnetic stopband 50.

Optionally, the first waveguide 20 in FIG. 5C may be understood as a waveguide on the radio frequency chip side, and may be specifically a chip waveguide cavity of the radio frequency chip, or may be a waveguide channel formed by a chip waveguide cavity of the radio frequency chip and a transition waveguide cavity in a PCB board. This is not limited in embodiments of this application.

It can be learned from FIG. 5C that the electromagnetic stopband 50 may be disposed on a mounting surface 1, that is, disposed on the radio frequency chip side, or may be disposed on a mounting surface 2, that is, disposed on the antenna apparatus side. This is not limited in embodiments of this application.

It may be understood that, provided that the N electromagnetic band gap units in the waveguide apparatus are located between the first waveguide and the antenna apparatus and are aperiodically arranged, to form the electromagnetic stopband, the N electromagnetic band gap units in the waveguide apparatus may be disposed on the antenna apparatus side or the first waveguide side (namely, the radio frequency chip side). This can prevent the signal transmitted in the first waveguide from leaking at the joint between the first waveguide and the antenna apparatus, and can resolve the problem of significant deterioration or even failure of signal transmission performance caused by the mounting deviation and the gap.

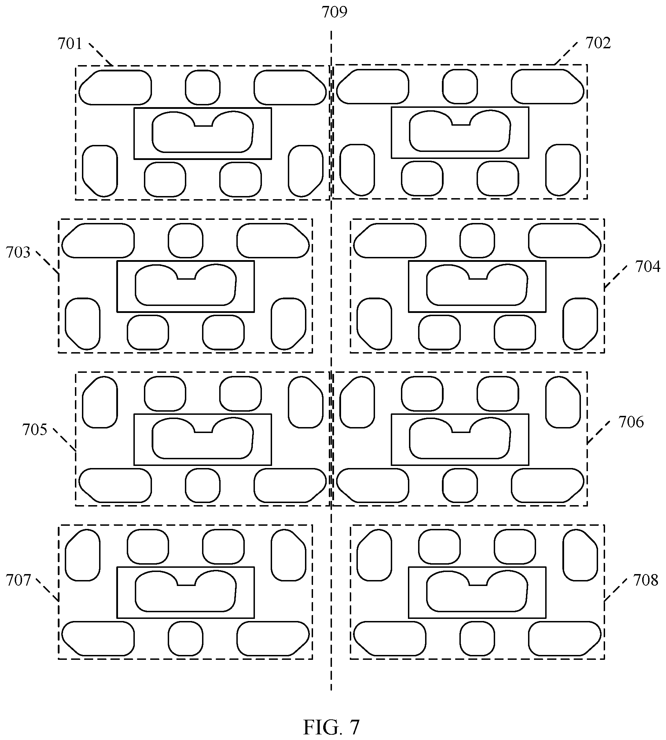

FIG. 7 is a diagram of a structure of a transceiver apparatus according to an embodiment of this application. It may be understood that the transceiver apparatus in this embodiment of this application may be considered as an appropriate variant or supplement of the embodiment in FIG. 4 or FIG. 5A. Alternatively, it may be understood that the transceiver apparatus in this embodiment of this application may be considered as an embodiment that can be independently executed. This is not limited in this application. The transceiver apparatus provided in this embodiment of this application may be used in a millimeter-wave radar or a millimeter-wave radar system, including but not limited to those shown in FIG. 1 to FIG. 3. It may be understood that the diagram of the structure of the transceiver apparatus shown as FIG. 7 may be considered as a top view of the transceiver apparatus.

It should be understood that the transceiver apparatus may be further obtained based on an appropriate variant or supplement of the embodiments in FIG. 6A to FIG. 6C. A principle of obtaining the transceiver apparatus is similar to a principle of obtaining the transceiver apparatus in FIG. 7 based on an appropriate variant or supplement of the embodiments in FIG. 4 or FIG. 5A. Therefore, in this application, the transceiver apparatus in FIG. 7 obtained only based on an appropriate variant or supplement of the embodiment in FIG. 4 or FIG. 5A is used as an example for description, but the transceiver apparatus obtained based on the appropriate variant or supplement of the embodiments in FIG. 6A to FIG. 6C is not described again. However, the transceiver apparatus obtained based on the appropriate variant or supplement of the embodiments in FIG. 6A to FIG. 6C also falls within the protection scope of this application.

As shown in FIG. 7, the transceiver apparatus includes M waveguide apparatuses shown in FIG. 4, where
M is an integer greater than 1.

For example, in the transceiver apparatus shown in FIG. 7, M=8, and correspondingly the transceiver apparatus includes eight waveguide apparatuses (701, 702, 703, 704, 705, 706, 707, and 708), where each waveguide apparatus includes a first waveguide and N electromagnetic band gap units. For positions and structure relationships of the N electromagnetic band gap units and the first waveguide, refer to related descriptions in FIG. 4. Details are not described herein again.

It should be understood that M=8 herein is merely an example for description, and should not constitute a limitation on embodiments of this application. M may alternatively be another integer greater than 1. This is not limited in embodiments of this application.

Optionally, the transceiver apparatus in this embodiment of this application may be a transition structure with a plurality of channels (that is, a plurality of waveguide apparatuses) that is obtained by performing operations such as overall rotation, replication, and translation on the single channel (that is, a single waveguide apparatus) shown in FIG. 4.

For example, in the transceiver apparatus shown in FIG. 7, the waveguide apparatuses 701, 702, 703, and 704 are obtained by performing overall replication and translation on the waveguide apparatus shown in FIG. 4, and the waveguide apparatuses 705, 706, 707, and 708 are obtained by making the electromagnetic band gap units in the waveguide apparatus shown in FIG. 4 mirror-symmetrical with respect to an x-axis, and then performing overall replication and translation.

It should be understood that a manner of obtaining the eight waveguide apparatuses in the transceiver apparatus by performing operations such as mirror symmetry, replication, and translation herein is merely an example for description, and should not constitute a limitation on embodiments of this application. The transceiver apparatus obtained based on, including but not limited to, the foregoing operations or an appropriate variant, supplement, or combination of the foregoing operations shall fall within the protection scope of embodiments of this application.

Like a case in which the waveguide apparatus shown in FIG. 4 is used in the application scenario shown in FIG. 5B, the transceiver apparatus in this embodiment of this application may also be used in a multi-channel structure of a millimeter-wave radar or a millimeter-wave radar system. Specifically, the transceiver apparatus is disposed between a waveguide outlet of a radio frequency chip and an antenna apparatus, and is aperiodically disposed around the waveguide outlet of the radio frequency chip, to form an electromagnetic stopband. This prevents a signal transmitted in a waveguide of the radio frequency chip from leaking at a joint between the waveguide outlet of the radio frequency chip and the antenna apparatus, implements reliable signal transmission from the waveguide outlet of the radio frequency chip to a waveguide feed port of the antenna apparatus, resolves a problem of significant deterioration or even failure of signal transmission performance caused by a mounting deviation and a gap, and improves signal transmission performance as well as robustness of the waveguide outlet of the radio frequency chip and the waveguide feed port of the antenna apparatus.

The following provides several possible examples about how the M waveguide apparatuses in the transceiver apparatus are aperiodically disposed around the waveguide outlet of the radio frequency chip.

### Example 1

The M waveguide apparatuses are mirror-symmetrically arranged.

Optionally, the M waveguide apparatuses are mirror-symmetrically arranged on a plane perpendicular to a signal transmission direction in a waveguide cavity in the radio frequency chip.

With reference to the transceiver apparatus shown in FIG. 7, it can be learned that the waveguide apparatuses 701, 703, 705, 707 are mirror-symmetrical to the waveguide apparatuses 702, 704, 706, 708 with respect to a dashed line 709.

It may be understood that, in Example 1, the M waveguide apparatuses are mirror-symmetrically arranged, and the M waveguide apparatuses are aperiodically disposed around the waveguide outlet of the radio frequency chip, to form the electromagnetic stopband. This can prevent the signal transmitted in the waveguide cavity in the radio frequency chip from leaking at the joint between the waveguide outlet of the radio frequency chip and the antenna apparatus, and can resolve the problem of significant deterioration or even failure of signal transmission performance caused by the mounting deviation and the gap.

### Example 2

Center points of the M waveguide apparatuses are not on a straight line.

With reference to the transceiver apparatus shown in FIG. 7, it can be learned that center points of the waveguide apparatuses 701, 703, 705, and 707 are not on a straight line, center points of the waveguide apparatuses 702, 704, 706, and 708 are not on a straight line either, and the center points of the waveguide apparatuses 701, 702, 703, 704, 705, 706, 707 and 708 are not on a straight line either.

It may be understood that, in Example 2, the center points of the M waveguide apparatuses are not on a straight line, and the M waveguide apparatuses are aperiodically disposed around the waveguide outlet of the radio frequency chip, to form the electromagnetic stopband. This can prevent the signal transmitted in the waveguide cavity in the radio frequency chip from leaking at the joint between the waveguide outlet of the radio frequency chip and the antenna apparatus, and can resolve the problem of significant deterioration or even failure of signal transmission performance caused by the mounting deviation and the gap.

### Example 3

Two of the M waveguide apparatuses have different structures.

Optionally, the two waveguide apparatuses with different structures may be waveguide apparatuses obtained by performing operations such as overall mirror symmetry, rotation, replication, and translation on the single waveguide apparatus shown in FIG. 4.

With reference to the transceiver apparatus shown in FIG. 7, it can be learned that structures of the waveguide apparatus 701 and the waveguide apparatus 705 are different. The waveguide apparatus 701 is obtained by performing overall replication and translation on the waveguide apparatus shown in FIG. 4, and the waveguide apparatus 705 is obtained by making the electromagnetic band gap units in the waveguide apparatus shown in FIG. 4 mirror-symmetrical with respect to an x-axis, and then performing overall replication and translation. Structures of the waveguide apparatus 704 and the waveguide apparatus 707 are also different, and so on. Details are not exhaustive herein.

Optionally, the M waveguide apparatuses may further include three or more waveguide apparatuses whose structures are different from each other. This is not limited in embodiments of this application.

It may be understood that, in Example 3, the two of the M waveguide apparatuses have different structures, and the M waveguide apparatuses are aperiodically disposed around the waveguide outlet of the radio frequency chip, to form the electromagnetic stopband. This can prevent the signal transmitted in the waveguide cavity in the radio frequency chip from leaking at the joint between the waveguide outlet of the radio frequency chip and the antenna apparatus, and can resolve the problem of significant deterioration or even failure of signal transmission performance caused by the mounting deviation and the gap.

It should be understood that the foregoing numerated examples (Example 1 to Example 3) are merely possible cases in which the M waveguide apparatuses are aperiodically disposed around the waveguide outlet of the radio frequency chip, and should not constitute a limitation on embodiments of this application. Other possible cases in which the M waveguide apparatuses are aperiodically disposed around the waveguide outlet of the radio frequency chip and that are obtained based on an appropriate variant, combination, or supplement of the foregoing several examples (Example 1 to Example 3) fall within the protection scope of embodiments of this application.

In a possible embodiment, the transceiver apparatus further includes an enclosure frame.

The enclosure frame is disposed on a periphery of the M waveguide apparatuses.

Optionally, the enclosure frame may be a metal enclosure frame.

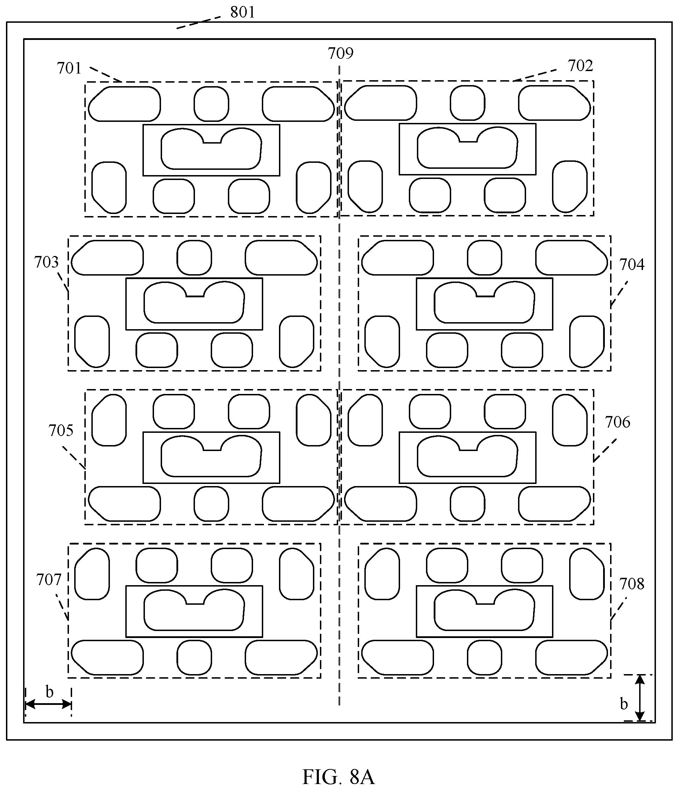

For details, refer to FIG. 8A. FIG. 8A is a diagram of a structure of a transceiver apparatus according to an embodiment of this application. It may be understood that the transceiver apparatus in this embodiment of this application may be considered as an appropriate variant or supplement of the embodiment in FIG. 4, FIG. 5A, or FIG. 7. Alternatively, it may be understood that the transceiver apparatus in this embodiment of this application may be considered as an embodiment that can be independently executed. This is not limited in this application. The transceiver apparatus provided in this embodiment of this application may be used in a millimeter-wave radar or a millimeter-wave radar system, including but not limited to those shown in FIG. 1 to FIG. 3. It may be understood that the diagram of the structure of the transceiver apparatus shown as FIG. 8A may be considered as a top view of the transceiver apparatus.

As shown in FIG. 8A, the transceiver apparatus further includes an enclosure frame 801.

For the transceiver apparatus, refer to related descriptions of the transceiver apparatus shown in FIG. 7. Details are not described herein again.

The enclosure frame 801 is disposed on a periphery of eight waveguide apparatuses (waveguide apparatuses 701, 702, 703, 704, 705, 706, 707, and 708) in the transceiver apparatus.

Optionally, the enclosure frame may be a metal enclosure frame.

In this embodiment of this application, the enclosure frame is disposed on the periphery of the M waveguide apparatuses to form a cavity. The cavity may meet, when a specific gap exists on a mounting surface corresponding to the transceiver apparatus, a condition of destroying wave transmission on the surface, to improve isolation between different channels (namely, different waveguide apparatuses). This resolves a problem of significant deterioration or even failure of signal transmission performance caused by a mounting deviation and a gap.

Optionally, a geometric center of the enclosure frame is the same as a geometric center of the M waveguide apparatuses.

With reference to FIG. 8A, it can be learned that a geometric center of the enclosure frame 801 is the same as a geometric center of the eight waveguide apparatuses (701, 702, 703, 704, 705, 706, 707, and 708).

The enclosure frame 801 may form a cavity. The cavity meets, when the specific gap exists on the mounting surface corresponding to the transceiver apparatus, the condition of destroying wave transmission on the surface, to improve the isolation between the different channels (namely, the different waveguide apparatuses). This resolves the problem of significant deterioration or even failure of signal transmission performance caused by the mounting deviation and the gap.

Optionally, a length of the enclosure frame in a first direction is the same as a length of a waveguide apparatus in the first direction.

The first direction is a signal transmission direction in the waveguide apparatus.

Optionally, with reference to FIG. 5B, it can be learned that the first direction is a transmission direction in which a signal of the radio frequency chip 10 is output from the chip waveguide cavity 20, successively passes through the PCB transition waveguide cavity 30 and the electromagnetic stopband 50, and arrives at an antenna apparatus side.

It may be understood that, that the length of the enclosure frame in the signal transmission direction in the waveguide apparatus is the same as a length of the waveguide apparatus in the signal transmission direction in the waveguide apparatus may be understood as that the enclosure frame has a same height as electromagnetic band gap units in the M waveguide apparatuses to form the cavity. The cavity meets, when the specific gap exists on the mounting surface corresponding to the transceiver apparatus, the condition of destroying wave transmission on the surface, to improve the isolation between the different channels (namely, the different waveguide apparatuses). This resolves the problem of significant deterioration or even failure of signal transmission performance caused by the mounting deviation and the gap.

Optionally, the enclosure frame is a continuous enclosure frame, or the enclosure frame is an enclosure frame having one or more notches.

When the enclosure frame is a continuous enclosure frame, refer to related descriptions of the enclosure frame 801 in FIG. 8A. Details are not described herein again.

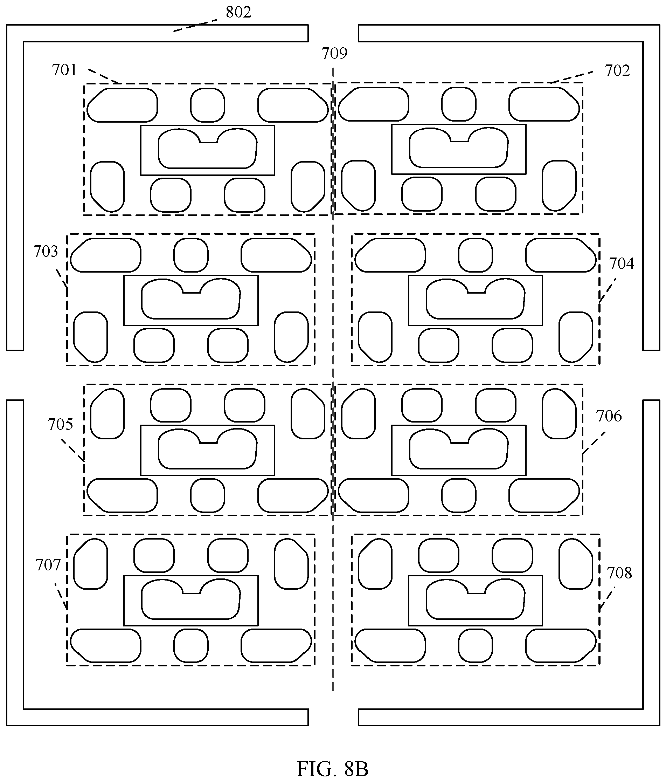

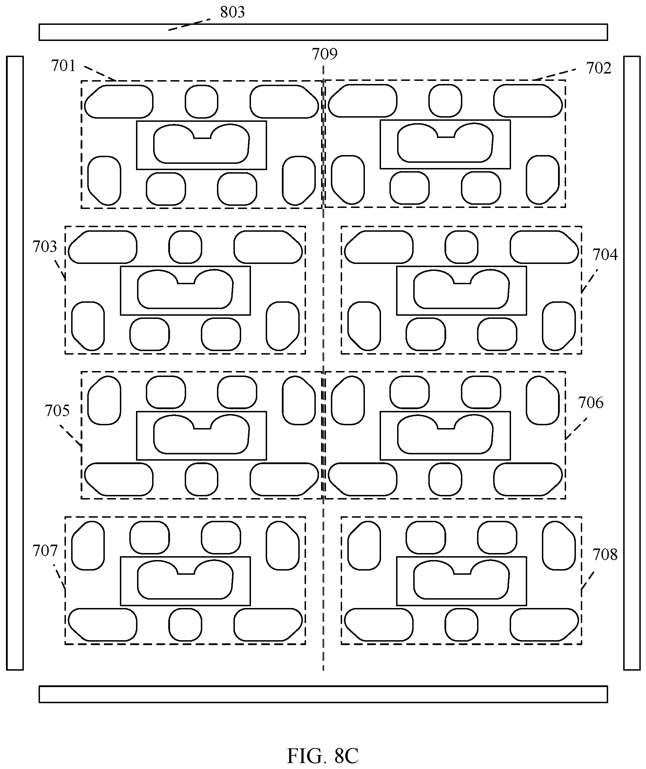

When the enclosure frame is an enclosure frame having one or more notches, for details, refer to FIG. 8B and FIG. 8C. FIG. 8B and FIG. 8C are diagrams of structures of two transceiver apparatuses according to embodiments of this application.

As shown in FIG. 8B, an enclosure frame 802 has four notches that are respectively located in four directions of the enclosure frame 802: top, bottom, left, and right.

As shown in FIG. 8C, an enclosure frame 803 has four notches that are respectively located in an upper left corner, an upper right corner, a lower left corner, and a lower right corner of the enclosure frame 803.

It may be understood that the enclosure frame in the transceiver apparatus may be a continuous enclosure frame (for example, the enclosure frame 801 in FIG. 8A), or may be an enclosure frame having one or more notches (for example, the enclosure frame 802 in FIG. 8B or the enclosure frame 803 in FIG. 8C). This is not limited in embodiments of this application.

It may be understood that, when the enclosure frame in the transceiver apparatus is an enclosure frame having one or more notches, a cavity formed by the enclosure frame needs to meet, when the specific gap exists on the mounting surface corresponding to the transceiver apparatus, the condition of destroying wave transmission on the surface, to improve the isolation between the different channels (namely, the different waveguide apparatuses). Lengths and a quantity of notches in the enclosure frame are not limited in embodiments of this application.

Optionally, a spacing between an inner wall of the enclosure frame and a waveguide apparatus at an edge meets the following condition: 0.25λ≤b≤0.5λ, where
b indicates the spacing between the inner wall of the enclosure frame and the waveguide apparatus at the edge, and λ indicates a vacuum wavelength of an electromagnetic wave transmitted in the waveguide apparatus.

Optionally, the spacing between the inner wall of the enclosure frame and the waveguide apparatus at the edge may be understood as a shortest edge-to-edge distance between the inner wall of the enclosure frame and the waveguide apparatus at the edge.

Optionally, with reference to FIG. 8A, it can be learned that a spacing b between the inner wall of the enclosure frame 801 and the waveguide apparatus 707 at the edge meets the foregoing condition, a spacing b between the inner wall of the enclosure frame 801 and the waveguide apparatus 708 at the edge also meets the foregoing condition, and the like. Details are not exhaustive herein.

It may be understood that the spacing between the inner wall of the enclosure frame and the waveguide apparatus at the edge ranges from 0.25λ to 0.5λ, to form the cavity. The cavity meets, when the specific gap exists on the mounting surface corresponding to the transceiver apparatus, the condition of destroying wave transmission on the surface, to improve the isolation between the different channels (namely, the different waveguide apparatuses).

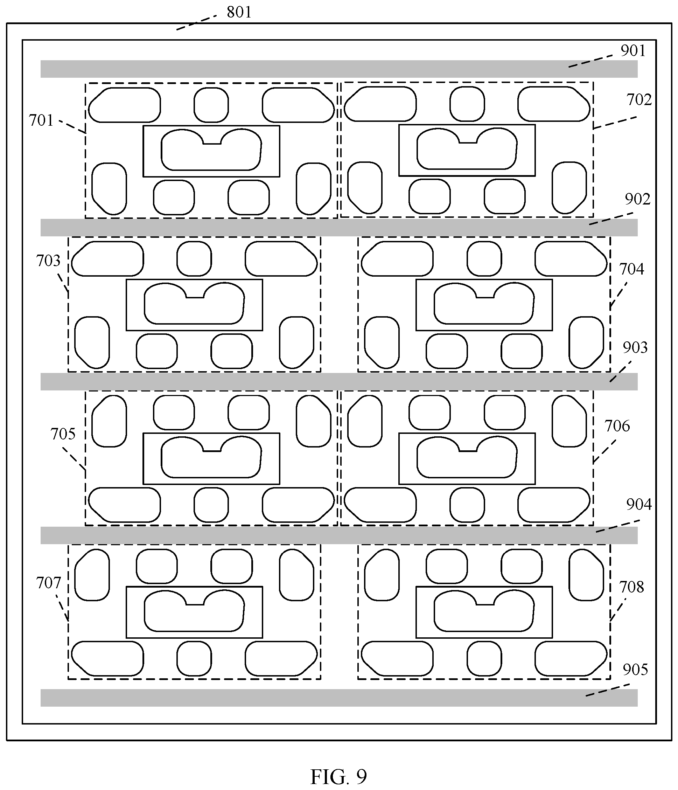

FIG. 9 is a diagram of a structure of a transceiver apparatus according to an embodiment of this application. It may be understood that the transceiver apparatus in this embodiment of this application may be considered as an appropriate variant or supplement of the embodiment in FIG. 4, FIG. 5A, FIG. 7, or FIG. 8A to FIG. 8C. Alternatively, it may be understood that the transceiver apparatus in this embodiment of this application may be considered as an embodiment that can be independently executed. This is not limited in this application. The transceiver apparatus provided in this embodiment of this application may be used in a millimeter-wave radar or a millimeter-wave radar system, including but not limited to those shown in FIG. 1 to FIG. 3. It may be understood that the diagram of the structure of the transceiver apparatus shown as FIG. 9 may be considered as a top view of the transceiver apparatus.

As shown in FIG. 9, the transceiver apparatus includes M waveguide apparatuses shown in FIG. 4, where
M is an integer greater than 1.

For example, in the transceiver apparatus shown in FIG. 9, M=8, and correspondingly the transceiver apparatus includes eight waveguide apparatuses (701, 702, 703, 704, 705, 706, 707, and 708). For positions and structure relationships of the eight waveguide apparatuses, refer to related descriptions in FIG. 7. Details are not described herein again. In addition, each waveguide apparatus includes a first waveguide and N electromagnetic band gap units. For positions and structure relationships of the N electromagnetic band gap units and the first waveguide, refer to related descriptions in FIG. 4. Details are not described herein again.

The transceiver apparatus further includes an enclosure frame 801.

Correspondingly, for a position and a structure relationship of the enclosure frame 801, refer to related descriptions in FIG. 8A. Details are not described herein again.

Optionally, the enclosure frame 801 in the transceiver apparatus may alternatively be replaced with the enclosure frame 802 in FIG. 8B, the enclosure frame 803 in FIG. 8C, or an enclosure frame in another structural form. This is not limited in embodiments of this application.

In addition, in the transceiver apparatus, grooves (901, 902, 903, 904, and 905) are further provided in a third direction.

The groove is located between two adjacent waveguide apparatuses, the third direction is parallel to a longer side of a cross section of a waveguide apparatus in a first direction, and the first direction is a signal transmission direction in a waveguide apparatus.

Optionally, with reference to FIG. 5B, it can be learned that the first direction is a transmission direction in which a signal of the radio frequency chip 10 is output from the chip waveguide cavity 20, successively passes through the PCB transition waveguide cavity 30 and the electromagnetic stopband 50, and arrives at an antenna apparatus side.

It may be understood that, in the transceiver apparatus in this embodiment of this application, the groove is provided in parallel to a longer side (that is, the third direction) of a cross section of the waveguide apparatus in the signal transmission direction in the waveguide apparatus, and the groove is located between the two adjacent waveguide apparatuses.

It can be learned from FIG. 9 that the groove 902 provided in the third direction is located between the adjacent waveguide apparatuses 701 and 703, and between the adjacent waveguide apparatuses 702 and 704; the groove 903 provided in the third direction is located between the adjacent waveguide apparatuses 703 and 705, and between the adjacent waveguide apparatuses 704 and 706; and the groove 904 provided in the third direction is located between the adjacent waveguide apparatuses 705 and 707, and between the adjacent waveguide apparatuses 706 and 708.

It may be understood that, because the waveguide apparatus is located between a waveguide outlet of a radio frequency chip and the antenna apparatus and is configured to prevent a signal transmitted in a waveguide of a radio frequency chip from leaking at a joint between the waveguide outlet of the radio frequency chip and the antenna apparatus, and the groove is located between the two adjacent waveguide apparatuses, the groove may be understood as a shallow groove structure (optionally, also referred to as a choke groove) that is dented in a direction of a longer side of a waveguide feed port of the antenna apparatus, so that a surface current on a plane of the waveguide feed port can be effectively blocked, and isolation between different channels (namely, different waveguide apparatuses) can be improved.

It should be understood that the five grooves provided in FIG. 9 are merely used as an example for description, and should not constitute a limitation on embodiments of this application. More or fewer grooves provided based on an actual quantity of waveguide apparatuses in the transceiver apparatus fall within the protection scope of embodiments of this application.

Optionally, a distance between the groove and a center point of a waveguide apparatus meets the following condition: 0.2λ≤c≤0.3λ, where
c indicates the distance between the groove and the center point of the waveguide apparatus, and λ indicates the vacuum wavelength of the electromagnetic wave transmitted in the waveguide apparatus.

It may be understood that the distance between the groove and the center point of the waveguide apparatus ranges from 0.2λ to 0.3λ, so that the surface current on the plane of the waveguide feed port can be effectively blocked, and the isolation between the different channels (namely, the different waveguide apparatuses) can be improved.

Optionally, a depth of the groove meets the following condition: 0.1λ≤d≤0.2λ, where
d indicates the depth of the groove, and λ indicates the vacuum wavelength of the electromagnetic wave transmitted in the waveguide apparatus.

It may be understood that the depth of the groove ranges from 0.1λ to 0.2λ, so that the surface current on the plane of the waveguide feed port can be effectively blocked, and the isolation between the different channels (namely, the different waveguide apparatuses) can be improved.

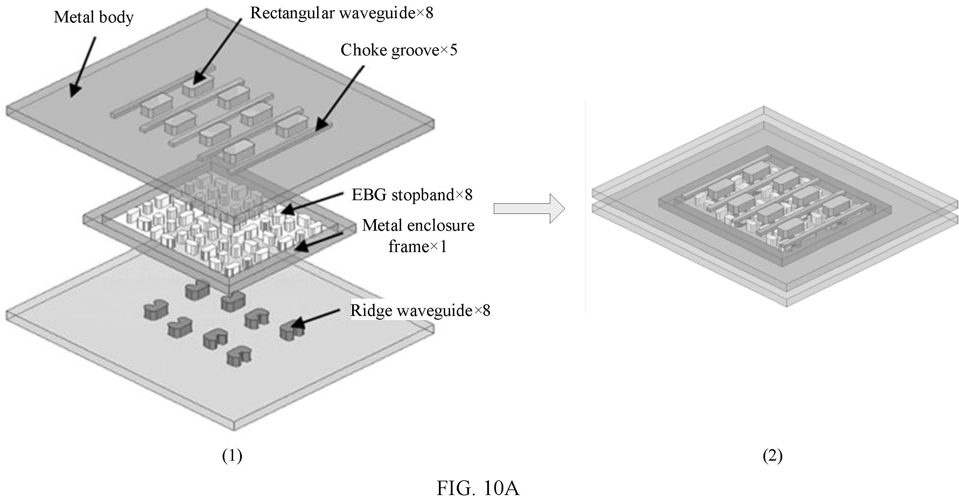

FIG. 10A is a three-dimensional diagram of a transceiver apparatus according to an embodiment of this application. It may be understood that the transceiver apparatus in this embodiment of this application may be considered as an appropriate variant or supplement of the embodiment in FIG. 4, FIG. 5A, FIG. 7, FIG. 8A to FIG. 8C, or FIG. 9. Alternatively, it may be understood that the transceiver apparatus in this embodiment of this application may be considered as an embodiment that can be independently executed. This is not limited in this application. The transceiver apparatus provided in this embodiment of this application may be used in a millimeter-wave radar or a millimeter-wave radar system, including but not limited to those shown in FIG. 1 to FIG. 3.

As shown in FIG. 10A, (1) in FIG. 10A shows a diagram of layered structures of the transceiver apparatus. The structure is mainly divided into three layers: an upper layer, a middle layer, and a lower layer. The lower layer includes eight ridge waveguides. The middle layer includes eight electromagnetic band gap EBG stopbands (where each EBG stopband includes N EBG units, and for details, refer to the N EBG units in the waveguide apparatus shown in FIG. 4, FIG. 6A, FIG. 6B, or FIG. 6C) and one metal enclosure frame. For positions and structure relationships of the eight electromagnetic band gaps, refer to related descriptions of the transceiver apparatus shown in FIG. 7. Details are not described herein again. For a position and a structure relationship of the metal enclosure frame, refer to related descriptions of the transceiver apparatus shown in FIG. 8A to FIG. 8C. Details are not described herein again. The upper layer includes five choke grooves, eight rectangular waveguides, and one metal body. For positions and structure relationships of the five choke grooves, refer to related descriptions of the transceiver apparatus shown in FIG. 9. Details are not described herein again.

In the transceiver apparatus shown in (1) in FIG. 10A, a radio frequency signal is transmitted from a ridge waveguide port of a radio frequency chip to a rectangular cross-sectional waveguide through an aperiodic electromagnetic band gap and a metal enclosure frame layer. This can resolve a problem of significant deterioration or even failure of signal transmission performance caused by a mounting deviation and a gap, implement reliable signal transmission from a waveguide outlet of the radio frequency chip to a waveguide feed port of an antenna apparatus, and improve signal transmission performance as well as robustness of the waveguide outlet of the radio frequency chip and the waveguide feed port of the antenna apparatus.

It may be understood that a diagram of a combined structure of the transceiver apparatus shown in (2) in FIG. 10A may be obtained by mounting the layered structures shown in (1) in FIG. 10A. The combined structure can resolve a problem of significant deterioration or even failure of signal transmission performance caused by a mounting deviation and a gap.

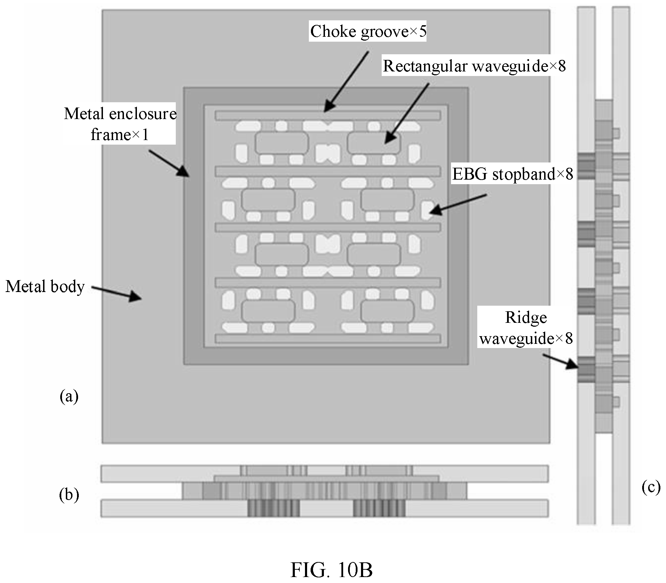

FIG. 10B is a plan view of the transceiver apparatus according to this embodiment of this application. It may be understood that (a) in FIG. 10B shows a top view of the transceiver apparatus shown in FIG. 10A, (b) in FIG. 10B shows a main view of the transceiver apparatus shown in FIG. 10A, and (c) in FIG. 10B shows a side view of the transceiver apparatus shown in FIG. 10A.

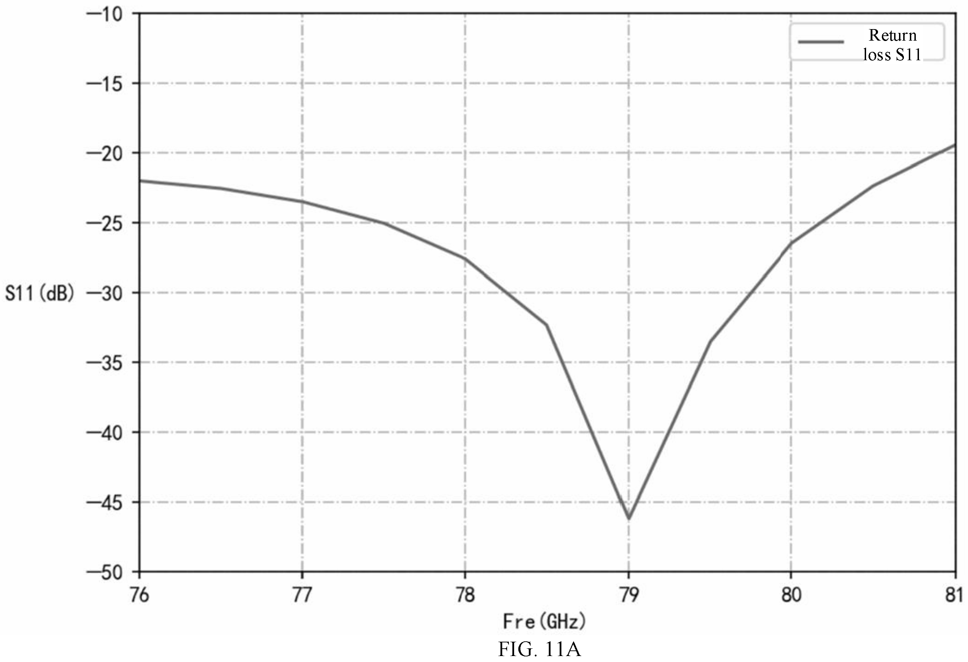

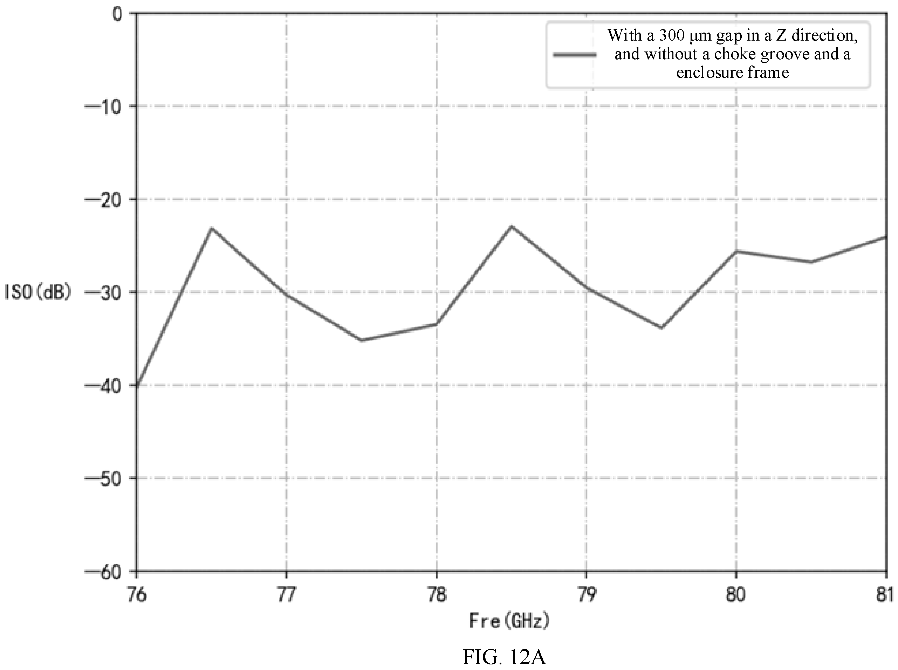

With reference to FIG. 11A to FIG. 11C and FIG. 12A to FIG. 12C, the following provides further descriptions that the waveguide apparatus and the transceiver apparatus provided in this application can resolve the problem of significant deterioration or even failure of signal transmission performance caused by the mounting deviation and the gap, implement reliable signal transmission from the waveguide outlet of the radio frequency chip to the waveguide feed port of the antenna apparatus, and improve signal transmission performance as well as robustness of the waveguide outlet of the radio frequency chip and the waveguide feed port of the antenna apparatus.

FIG. 11A is an effect diagram of a return loss according to an embodiment of this application.

It can be learned from FIG. 11A that, in a scenario of simulating a 0 mm gap in a Z direction during mounting, a return loss corresponding to signal transmission from the waveguide outlet of the radio frequency chip to the waveguide feed port of the antenna apparatus is less than or equal to -20 dB at 76-81 GHz.

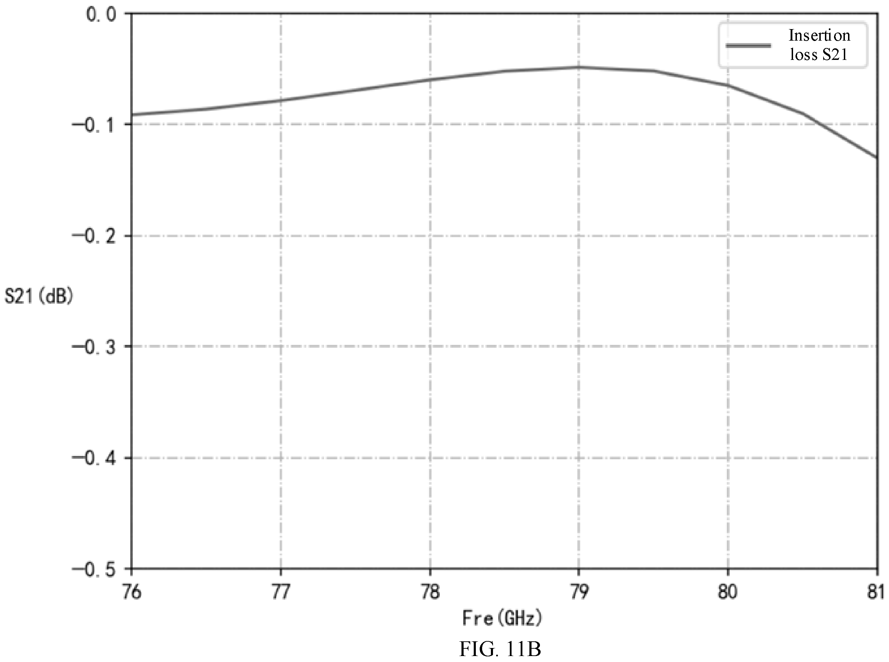

FIG. 11B is an effect diagram of an insertion loss according to an embodiment of this application.

It can be learned from FIG. 11B that, in a scenario of simulating a 0 mm gap in a Z direction during mounting, an insertion loss corresponding to signal transmission from the waveguide outlet of the radio frequency chip to the waveguide feed port of the antenna apparatus is less than or equal to 0.15 dB at 76-81 GHz.

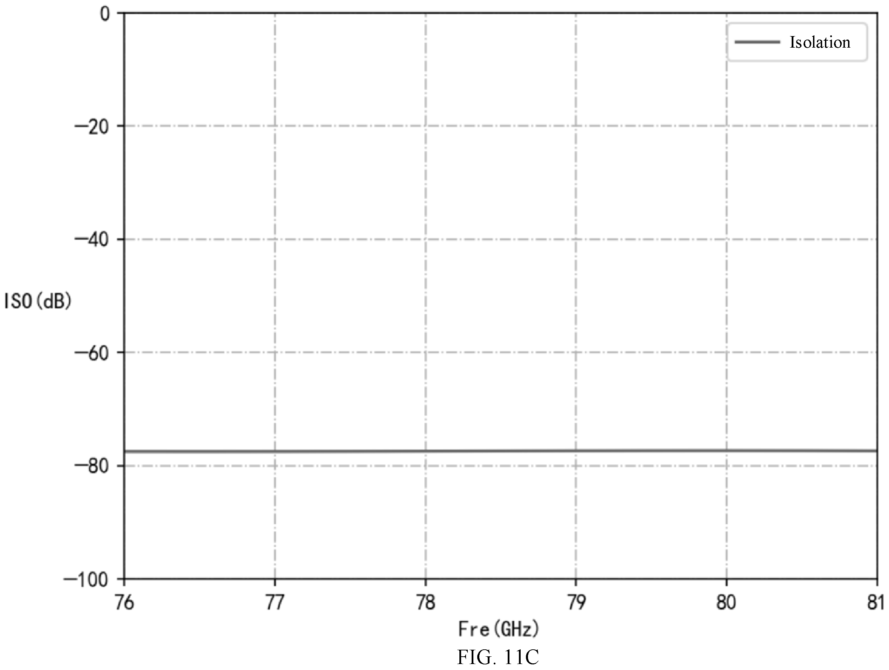

FIG. 11C is an effect diagram of isolation according to an embodiment of this application.

It can be learned from FIG. 11C that, in a scenario of simulating 0 mm gap in a Z direction during mounting, the worst isolation corresponding to signal transmission from the waveguide outlet of the radio frequency chip to the waveguide feed port of the antenna apparatus is greater than or equal to 75 dB at 76-81 GHz.

FIG. 12A is an effect diagram of isolation according to an embodiment of this application.

FIG. 12A shows a curve with worst isolation corresponding to signal transmission from a waveguide outlet of a radio frequency chip to a waveguide feed port of an antenna apparatus through eight channels in a scenario of using a structural design of a single EBG with a 0.3 mm gap in a Z direction during mounting.

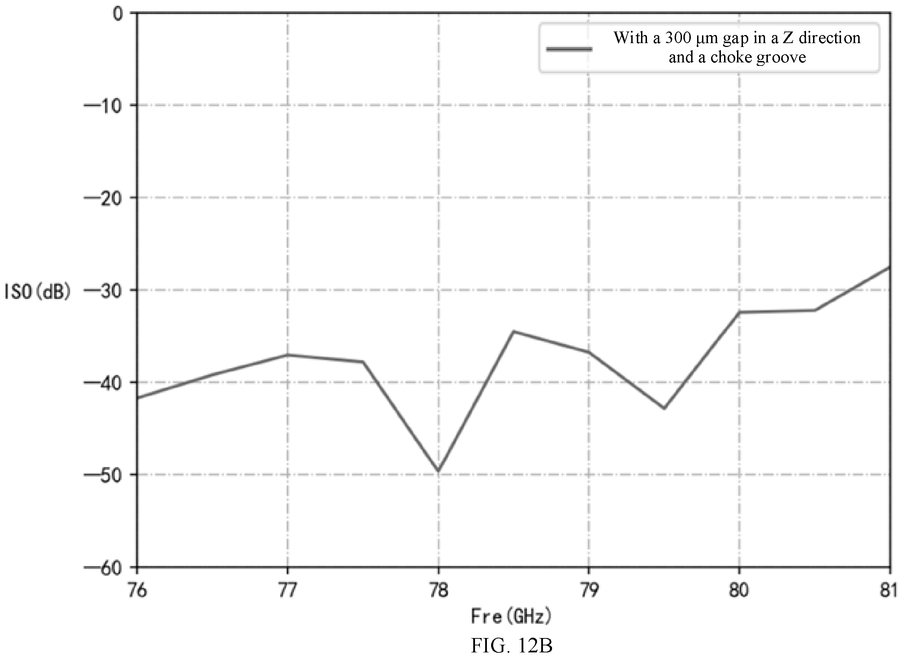

FIG. 12B is an effect diagram of isolation according to an embodiment of this application.

FIG. 12B shows a curve with worst isolation corresponding to signal transmission from a waveguide outlet of a radio frequency chip to a waveguide feed port of an antenna apparatus through eight channels in a scenario of using a structural design of an EBG and a choke groove with a 0.3 mm gap in a Z direction during mounting.

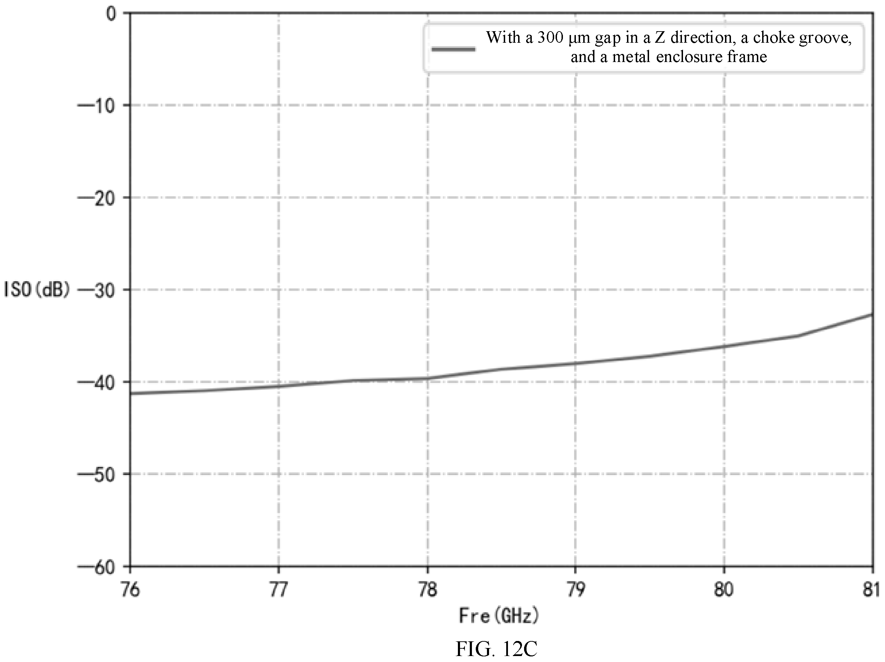

FIG. 12C is an effect diagram of isolation according to an embodiment of this application.

FIG. 12C shows a curve with worst isolation corresponding to signal transmission from a waveguide outlet of a radio frequency chip to a waveguide feed port of an antenna apparatus through eight channels in a scenario of using a structural design of an EBG, a choke groove, and a metal enclosure frame with a 0.3 mm gap in a Z direction during mounting.

It can be learned from FIG. 12A to FIG. 12C that, after the choke groove and the metal enclosure frame are introduced, the worst isolation corresponding to signal transmission from the waveguide outlet of the radio frequency chip to the waveguide feed port of the antenna apparatus through channels increases from 19 dB to 36 dB.

Data in the following table may be further obtained based on the effect diagrams of FIG. 11A to FIG. 11C and FIG. 12A to FIG. 12C.

| Assembly tolerance (mm) | Return loss (dB) | Insertion loss (dB) | Worst isolation (dB) |
|---|---|---|---|
| X:0+Y:0+Z:0 | -20 | 0.15 | 75 |
| X:0.2+Y:0.2+Z:0.1 | -14 | 0.3 | 49 |
| X:0.2+Y:0.2+Z:0.2 | -12 | 0.4 | 42 |
| X:0.2+Y:0.2+Z:0.3 | -10.5 | 0.5 | 36 |

This table shows signal transition performance from the waveguide outlet of the radio frequency chip to the waveguide feed port of the antenna apparatus under different horizontal and vertical dimension limit deviations. It can be learned that, in a scenario with a maximum mounting deviation of X:0.2+Y:0.2+Z:0.3 mm, channel performance from the waveguide outlet of the radio frequency chip to the waveguide feed port of the antenna apparatus can still meet a use requirement.

In addition, in a possible embodiment, a preparation method for a waveguide apparatus and/or a transceiver apparatus in this application is further provided. A specific procedure of the preparation method is as follows:
Method 1: N electromagnetic band gap units, a metal enclosure frame, and a choke groove may be obtained through plastic layered molding, then electroplating is performed on a surface of each mold, and finally, a waveguide apparatus and/or a transceiver apparatus including the N electromagnetic band gap units, the metal enclosure frame, and the choke groove are/is obtained through layer brazing.

A plastic layered molding process is as follows: Plastic is first heated and melted in the bottom of an injection molding machine, then pushed by a screw of the injection molding machine, enters a mold cavity through an injection nozzle of the injection molding machine and a casting system of a mold. The plastic is cooled and hardened, and a product is demolded.

Plastic electroplating is to cover a plastic surface with a metal layer and give a metal property. A specific process includes surface cleaning, solvent treatment, conditioning treatment, and sensitivity treatment.

Brazing is a welding method in which solder, whose melting point is lower than a melting point of a weldment, and a weldment are simultaneously heated to a melting temperature of the solder, and a gap of a solid workpiece is filled with a liquid solder to connect metals. During brazing, an oxidation film and oil stains on a contact surface of a base metal should be removed first, so that a capillary tube can play a role after the solder melts, to increase wettability and capillary fluidity of the solder.

Method 2: N electromagnetic band gap units, a metal enclosure frame, and a choke groove may alternatively be machined, and then the N electromagnetic band gap units, the metal enclosure frame, and the choke groove are formed by welding, to obtain a waveguide apparatus and/or a transceiver apparatus.

The waveguide apparatus and/or the transceiver apparatus obtained by using the foregoing preparation method can resolve a problem of significant deterioration or even failure of signal transmission performance caused by a mounting deviation and a gap, implement reliable signal transmission from a waveguide outlet of a radio frequency chip to a waveguide feed port of the antenna apparatus, and improve signal transmission performance as well as robustness of the waveguide outlet of the radio frequency chip and the waveguide feed port of the antenna apparatus.

For example, the waveguide apparatus shown in FIG. 4, FIG. 5A, and FIG. 6A to FIG. 6C and/or the transceiver apparatus shown in any one of FIG. 7, FIG. 8A to FIG. 8C, FIG. 9, FIG. 10A, and FIG. 10B may be obtained by using the foregoing waveguide apparatus preparation method. For structural features and functional features of the waveguide apparatus and the transceiver apparatus, refer to corresponding descriptions in FIG. 4, FIG. 5A, FIG. 6A to FIG. 6C, FIG. 7, FIG. 8A to FIG. 8C, FIG. 9, FIG. 10A, and FIG. 10B. Details are not described herein again.

This application provides a chip. The chip includes a waveguide apparatus or a transceiver apparatus provided in this application.

This application provides a radar or radar system. The radar or the radar system includes the waveguide apparatus, the transceiver apparatus, or the chip provided in this application. It should be noted that there may be a smart sensor that is integrated with a plurality of sensors. When the smart sensor includes a millimeter-wave detection function, the smart sensor may also be referred to as a millimeter-wave radar or a millimeter-wave radar system.

This application provides a terminal device. The terminal device includes the waveguide apparatus or the transceiver apparatus provided in this application. For example, the terminal device may be a transportation tool, for example, a transportation means used in any possible scenario, for example, a vehicle, a truck, an aircraft, an uncrewed aerial vehicle, a slow transport vehicle, a spacecraft, or a ship, or may be any device that can carry a detection apparatus, for example, a surveying and mapping device. One or more waveguide apparatuses or transceiver apparatuses provided in this application are deployed on the terminal device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A waveguide apparatus, comprising:
a first waveguide and N electromagnetic band gap units, wherein N is an integer greater than 0; and
the N electromagnetic band gap units are located between the first waveguide and an antenna apparatus, the N electromagnetic band gap units are aperiodically disposed around the first waveguide, and signal transmission is performed between the first waveguide and the antenna apparatus.

2. The waveguide apparatus according to claim 1, wherein two adjacent electromagnetic band gap units in the N electromagnetic band gap units have different cross-sectional shapes.

3. The waveguide apparatus according to claim 1 or 2, wherein the N electromagnetic band gap units are mirror-symmetrically arranged.

4. The waveguide apparatus according to any one of claims 1 to 3, wherein two groups of adjacent electromagnetic band gap units in the N electromagnetic band gap units have different spacings.

5. The waveguide apparatus according to any one of claims 1 to 4, wherein the N electromagnetic band gap units are arranged in a rectangular configuration around the first waveguide.

6. The waveguide apparatus according to any one of claims 1 to 5, wherein two adjacent electromagnetic band gap units in the N electromagnetic band gap units have different cross-sectional areas.

7. The waveguide apparatus according to any one of claims 1 to 6, wherein the N electromagnetic band gap units are protrusion structures with rectangular cut corners.

8. The waveguide apparatus according to any one of claims 1 to 3, wherein two groups of adjacent electromagnetic band gap units in the N electromagnetic band gap units have a same spacing.

9. The waveguide apparatus according to any one of claims 1 to 8, wherein the N electromagnetic band gap units have three types of structural forms, and N=7.

10. The waveguide apparatus according to any one of claims 1 to 9, wherein the N electromagnetic band gap units have a same length in a first direction, and the first direction is a signal transmission direction in the first waveguide.

11. The waveguide apparatus according to any one of claims 1 to 10, wherein at least two of the N electromagnetic band gap units have different lengths in a second direction, and the second direction is perpendicular to the signal transmission direction in the first waveguide.

12. The waveguide apparatus according to any one of claims 1 to 11, wherein an edge-to-edge spacing between any two adjacent electromagnetic band gap units in the N electromagnetic band gap units meets the following condition: 0.15λ≤a≤0.3λ, wherein
a indicates the edge-to-edge spacing between the any two adjacent electromagnetic band gap units in the N electromagnetic band gap units, and λ indicates a vacuum wavelength of an electromagnetic wave transmitted in the first waveguide.

13. The waveguide apparatus according to any one of claims 1 to 12, wherein the first waveguide is a ridge waveguide.

14. The waveguide apparatus according to any one of claims 1 to 13, wherein the N electromagnetic band gap units are disposed on the antenna apparatus side or the first waveguide side.

15. A transceiver apparatus, comprising M waveguide apparatuses according to any one of claims 1 to 14, wherein M is an integer greater than 1.

16. The transceiver apparatus according to claim 15, wherein the M waveguide apparatuses are aperiodically arranged.

17. The transceiver apparatus according to claim 15 or 16, wherein the M waveguide apparatuses are mirror-symmetrically arranged.

18. The transceiver apparatus according to any one of claims 15 to 17, wherein center points of the M waveguide apparatuses are not on a straight line.

19. The transceiver apparatus according to any one of claims 15 to 18, wherein two of the M waveguide apparatuses have different structures.

20. The transceiver apparatus according to any one of claims 15 to 19, wherein the transceiver apparatus further comprises an enclosure frame, and the enclosure frame is disposed on a periphery of the M waveguide apparatuses.

21. The transceiver apparatus according to claim 20, wherein a geometric center of the enclosure frame is the same as a geometric center of the M waveguide apparatuses.

22. The transceiver apparatus according to claim 20 or 21, wherein a length of the enclosure frame in a first direction is the same as a length of a waveguide apparatus in the first direction, and the first direction is a signal transmission direction in the waveguide apparatus.

23. The transceiver apparatus according to any one of claims 20 to 22, wherein the enclosure frame is a continuous enclosure frame, or the enclosure frame is an enclosure frame having one or more notches.

24. The transceiver apparatus according to any one of claims 20 to 23, wherein a spacing between an inner wall of the enclosure frame and a waveguide apparatus at an edge meets the following condition: 0.25λ≤b≤0.5λ, wherein
b indicates the spacing between the inner wall of the enclosure frame and the waveguide apparatus at the edge, and λ indicates a vacuum wavelength of an electromagnetic wave transmitted in the waveguide apparatus.

25. The transceiver apparatus according to any one of claims 15 to 24, wherein a groove is provided in a third direction, and the groove is located between two adjacent waveguide apparatuses; and
the third direction is parallel to a longer side of a cross section of a waveguide apparatus in the first direction, and the first direction is the signal transmission direction in the waveguide apparatus.

26. The transceiver apparatus according to claim 25, wherein a distance between the groove and a center point of a waveguide apparatus meets the following condition: 0.2λ≤c≤0.3λ, wherein
c indicates the distance between the groove and the center point of the waveguide apparatus, and λ indicates the vacuum wavelength of the electromagnetic wave transmitted in the waveguide apparatus.

27. The transceiver apparatus according to claim 25 or 26, wherein a depth of the groove meets the following condition: 0.1λ≤d≤0.2λ, wherein
d indicates the depth of the groove, and λ indicates the vacuum wavelength of the electromagnetic wave transmitted in the waveguide apparatus.

28. A radar, comprising the waveguide apparatus according to any one of claims 1 to 14 or the transceiver apparatus according to any one of claims 15 to 27.

29. A terminal device, wherein the terminal device comprises the waveguide apparatus according to any one of claims 1 to 14, or the transceiver apparatus according to any one of claims 15 to 27, or the radar according to claim 28.

30. A vehicle end, wherein the vehicle end comprises the waveguide apparatus according to any one of claims 1 to 14, or the transceiver apparatus according to any one of claims 15 to 27, or the radar according to claim 28, or the terminal device according to claim 29.
